# EUROPÄISCHE PATENTANMELDUNG

(11) **EP 3 225 303 A1**
(43) Veröffentlichungstag der Anmeldung: **04.10.2017**
(21) Anmeldenummer: 16163229.4
(22) Anmeldetag: 31.03.2016
(51) Int. Cl.: B01J 8/00, B65G 69/04

(54) **VORRICHTUNG ZUM BEFÜLLEN EINES BEHÄLTERS MIT PARTIKELFÖRMIGEM MATERIAL**

(71) Anmelder: TIME Global Solution, 85077 Manching (DE)
(72) Erfinder: COTA, Aldo, 85077 Manching (DE)
(74) Vertreter: Reitstötter Kinzebach

(57) **Zusammenfassung**

Die Erfindung betrifft eine Befüllvorrichtung (1) zum Befüllen eines Behälters mit einem partikelförmigen Material (28). Die Befüllvorrichtung (1) umfasst einen Zuführbehälter (2), der mit dem partikelförmigen Material (28) befüllbar ist, wobei der Zuführbehälter (2) eine untere Öffnung (2.2) aufweist. Zudem umfasst die Befüllvorrichtung (1) eine radiale Verteileinrichtung (3), welcher das partikelförmige Material (28) durch die untere Öffnung (2.2) des Zuführbehälters (2) zuführbar ist, und welche mit dem Zuführbehälter (2) um eine Drehachse (A) drehbar verbunden ist, zum Verteilen des von dem Zuführbehälter (2) der Verteileinrichtung (3) zugeführten partikelförmigen Materials (28) in dem Behälter. Die Befüllvorrichtung ist dadurch gekennzeichnet, dass die Verteileinrichtung (3) mittels einer Antriebseinrichtung (4) antreibbar ist, die außerhalb des Zuführbehälters (2) angeordnet ist.

## Beschreibung

Die Erfindung betrifft eine verbesserte Vorrichtung zum Befüllen eines Behälters, wie z.B. eines chemischen Reaktors, mit einem partikelförmigen Material. Die Befüllvorrichtung umfasst einen Zuführbehälter und eine damit drehbar verbundene radiale Verteileinrichtung; Die Verteileinrichtung wird über eine außenliegende, dien Füllvorgang nicht behindernde Antriebseinrichtung in eine kontrollierte Drehbewegung versetzt. Weiterhin betrifft die Erfindung ein verfahren zum Befüllen eines Behälters mit partikelförmigem Füllmaterial mit Hilfe dieser erfindungsgemäßen Füllvorrichtung.

### Hintergrund der Erfindung:

Chemische Reaktoren enthalten häufig partikelförmiges Katalysatormaterial, das die gewünschten chemischen Reaktionen beschleunigt. Die Art und Weise, wie ein Reaktor mit Katalysatormaterial befüllt wird, hat einen großen Einfluss auf den späteren Ablauf der in dem Behälter stattfindenden chemischen Reaktionen. Dabei ist es besonders wichtig, dass das Katalysatormaterial gleichmäßig und schonend im Reaktorbehälter verteilt wird. Insbesondere ist ein kontinuierlicher, gleichmäßiger, schonender und störungsfreier Befüllvorgang von großer Bedeutung.

Für die Durchführung chemischer Reaktionen ist insbesondere die Güte der Katalysatorfüllung von großer Bedeutung. Ein homogenes Katalysatorbett gewährleistet eine gleichmäßige Temperaturverteilung im Reaktor. Beim Einfüllen der mechanisch häufig sehr empfindlichen Katalysatorpartikel können aufgrund zu großer mechanischer Krafteinwirkung Partikel zerbrechen oder es kann Katalysatormasse abgerieben werden. Dadurch wird die Katalysatorschüttung verdichtet und führt bei Betrieb des Reaktors zu unerwünschten Druckverlusten. Bei ungleichmäßiger Befüllung besteht außerdem die Gefahr der Ausbildung sogenannter "Hot Spots", d.h. Zonen unerwünscht erhöhter Temperatur im Reaktor, welche die Steuerung des Reaktionsverlaufs beeinträchtigen. Bei der Befüllung von Reaktoren mit Katalysatorpartikeln ist daher besonderes Augenmerk auf die Homogenität der erhaltenen Schüttung zu richten. Dies versucht man durch möglichst schonende Befüllung des Reaktors mit den Katalysatorpartikeln zu erreichen.

Aus der WO 2005/051814 A1 ist eine Vorrichtung zum Befüllen eines Behälters mit festen Teilchen bekannt. Die Vorrichtung umfasst dabei einen Verteiler, der Kanäle aufweist, durch welche die festen Teilchen in den Behälter gelangen. Die Vorrichtung umfasst dabei einen Motor, der innerhalb der Vorrichtung angeordnet ist. Der Verteiler ist dabei mit dem Motor verbunden und kann dadurch angetrieben werden.

Weiterhin ist aus der EP 2 648 837 A1 eine Vorrichtung zum Befüllen eines Behälters mit festen Teilchen bekannt, wie sie auch in der WO 2005/051814 beschrieben ist. Es ist daher auch bei dieser Vorrichtung der Motor innerhalb der Vorrichtung angeordnet. Zusätzlich ist aus der EP 2 648 837 A1 bekannt, eine komplex aufgebaute Membran anzuordnen, die eine Vielzahl von Verschlussklappen aufweist. Dadurch sollen die festen Teilchen gleichförmiger in dem Behälter verteilt werden.

Schließlich ist aus der EP 0 482 991 B1 eine Vorrichtung zum Füllen eines Behälters mit rieselfähigem Gut bekannt. Die Vorrichtung umfasst dabei einen Versorgungstrichter, einen Verteilerkopf und Mittel zum Verteilen des rieselfähigen Guts. Die Mittel zum Verteilen umfassen Mittel zum Regulieren, über welche der Durchfluss des rieselfähigen Guts gesteuert werden kann. Auch diese Vorrichtung umfasst einen Motor, der eine Welle antreibt, der jedoch ebenfalls innerhalb der Vorrichtung angeordnet ist.

Nachteilig an all diesen Vorrichtungen ist es jedoch, dass bei der Befüllung eines Behälters mit festen Teilchen, diese ungehindert auf den innenliegenden, mittig angeordneten Antriebsmotor auftreffen und dadurch beschädigt werden können. Zudem wird durch den innenliegenden Motor das Durchsatzvolumen unnötig vermindert.

### Kurzfassung der Erfindung:

Aufgabe der vorliegenden Erfindung ist daher die Bereitstellung einer verbesserten Befüllvorrichtung, mit welcher eine schonendere Befüllung eines Behälters mit partikelförmigem Material durch weitgehende Vermeidung von Beschädigung des partikelförmigen Materials während des Befüllvorgangs ermöglicht wird.

Gelöst wird diese Aufgabe durch die Befüllvorrichtung des Anspruchs 1. Vorteilhafte Weiterbildungen der Befüllvorrichtung sind Gegenstände der abhängigen Ansprüche. Durch die damit erreichbare geringere mechanische Belastung des partikelförmigen Füllguts wird eine Erhöhung der Füllgeschwindigkeit und damit eine weitere Minimierung der Stillstandzeiten der entsprechenden technischen Anlage, wie z.B. eines chemischen Reaktors, aufgrund eines schnelleren Austauschs von Katalysatormaterial ermöglicht.

### Figurenbeschreibung:

- Figur 1: zeigt ein Ausführungsbeispiel der erfindungsgemäßen Befüllvorrichtung,
- Figur 2a: zeigt eine Schnittansicht der erfindungsgemäßen Befüllvorrichtung aus Figur 1,
- Figur 2b: zeigt eine Vergrößerung des Bereichs C aus der Figur 2a,
- Figur 3a: zeigt ein Ausführungsbeispiel eines Antriebs mittels als Zahnräder ausgebildeter Antriebsmittel und die Anordnung dieser Antriebsmittel relativ zueinander,
- Figur 3b: zeigt ein Ausführungsbeispiel eines Antriebs über als Riemenscheiben ausgebildeter Antriebsmittel mit offener Riemenführung und die Anordnung dieser Antriebsmittel relativ zueinander,
- Figur 4a: zeigt ein Ausführungsbeispiel einer Verteileinrichtung der Befüllvorrichtung aus Figur 1 aus einer Seitenansicht,
- Figur 4b: zeigt ein Ausführungsbeispiel einer Verteileinrichtung der Befüllvorrichtung aus Figur 1 aus einer Ansicht von oben,
- Figur 4c: zeigt eine weitere, stark schematisierte Seitenansicht der Verteileinrichtung, in welcher Flüsse des partikelförmigen Materials durch die Befüllvorrichtung angedeutet sind,
- Figuren 5a bis 5c: zeigen ein erstes Ausführungsbeispiel eines Durchflusssteuerungsmittels der Befüllvorrichtung und
- Figuren 6a bis 6c: zeigen ein zweites Ausführungsbeispiel eines Durchflusssteuerungsmittels der Befüllvorrichtung
- Figuren 7a und 7b: zeigen eine weitere Ausgestaltung eines Durchflusssteuerungsmittels aus einer ersten, unteren Scheibe mit konzentrisch angeordneten Durchlassöffnungen analog Figur 6a. Zur Veränderung, insbesondere abschnittsgenauen Steuerung, der Durchflussmenge wird darauf eine zweite Scheibe in Form einer Gitterscheibe gemäß Figur 7a aufgesetzt, deren konzentrischen ringförmigen Stege so ausgebildet sind, dass sie die Durchlassöffnungen der ersten Scheibe partiell in definierter weise abdecken (Figur 7b) und so die Durchflussmenge des Füllguts verringern.
- und Figur 8: zeigt eine weitere Ausgestaltung des Zuführbehälters der Befüllvorrichtung aus Figur 1.

### Detaillierte Beschreibung der Erfindung:

### A. Bevorzugte Ausführungsformen:

Die Erfindung betrifft insbesondere folgende Ausführungsformen:
1. Befüllvorrichtung (1) zum Befüllen eines Behälters mit partikelförmigem Material (28), umfassend
   - einen Zuführbehälter (2), der mit dem partikelförmigen Material (28) befüllbar ist, wobei der Zuführbehälter (2) eine untere Öffnung (2.2) aufweist, und
   - eine radiale Verteileinrichtung (3), welcher das partikelförmige Material (28) durch die untere Öffnung (2.2) des Zuführbehälters (2) zuführbar ist, und welche mit dem Zuführbehälter (2) um eine Drehachse (A) drehbar verbunden ist, zum Verteilen des von dem Zuführbehälter (2) der Verteileinrichtung (3) zugeführten partikelförmigen Materials (28) in dem zu befüllenden Behälter,
   **dadurch gekennzeichnet, dass**
   - die Verteileinrichtung (3) mittels einer Antriebseinrichtung (4) antreibbar ist, die außerhalb des Zuführbehälters (2) angeordnet ist.
2. Befüllvorrichtung (1) nach Ausführungsform 1,
   **dadurch gekennzeichnet, dass**
   die Antriebseinrichtung (4) an einer Außenwand (11) des Zuführbehälters (2) angeordnet ist.
3. Befüllvorrichtung (1) nach Ausführungsform 1 oder 2,
   **dadurch gekennzeichnet, dass**
   die Antriebseinrichtung (4) einen Motor (4.1) umfasst, der mit einem ersten Antriebsmittel (4.2, 4.2a) gekoppelt ist, welches um die Drehachse (A) drehbar ist, wobei das erste Antriebsmittel (4.2, 4.2a) mit der Verteileinrichtung (3) verbunden ist.
4. Befüllvorrichtung (1) nach Ausführungsform 3,
   **dadurch gekennzeichnet, dass**
   ein zweites Antriebsmittel (4.3) in das erste Antriebsmittel (4.2) eingreift, so dass ein Drehmoment des zweiten Antriebsmittels (4.3) auf das erste Antriebsmittel (4.2) übertragbar ist.
5. Befüllvorrichtung (1) nach Ausführungsform 3,
   , **dadurch gekennzeichnet, dass**
   das zweites Antriebsmittel eine Antriebsriemenscheibe (4.3a) ist, die über einen Antriebsriemen (46) das erste Antriebsmittel antreibt, das als angetriebenen Riemenscheibe (4.2a) ausgebildet ist, so dass ein Drehmoment der zweiten Riemenscheibe (4.3a) auf die erste Riemenscheibe (4.2a) übertragbar ist.
6. Befüllvorrichtung (1) nach Ausführungsform 4 oder 5
   **dadurch gekennzeichnet, dass**
   das erste Antriebsmittel (4.2, 4.2a) zwischen dem Zuführbehälter (2) und der Verteileinrichtung (3) angeordnet ist und
   das Drehmoment des zweiten Antriebsmittels (4.3,4.3a) mittels des ersten Antriebsmittels (4.2,4.2a) auf die Verteileinrichtung (3) übertragen wird.
7. Befüllvorrichtung (1) nach einer der vorhergehenden Ausführungsformen, **dadurch gekennzeichnet, dass**
   die Verteileinrichtung (3) eine Vielzahl von Sektoren (8) aufweist, die von der Drehachse
   (A) radial nach außen gerichtet sind und die durch Trennelemente (9) voneinander getrennt sind, wobei die Trennelemente (9) zur Drehachse (A) radial nach außen verlaufen, so dass zwischen jeweils zwei Trennelementen (9) eine Auslassöffnung (21) für das partikelförmige Material (28) gebildet ist.
8. Befüllvorrichtung (1) nach Ausführungsform7,
   **dadurch gekennzeichnet, dass**
   die Sektoren (8.1, 8.2, 8.3) eine Sektorenöffnung (8.1 a, 8.2a, 8.3a) aufweisen, die in Richtung des Zuführbehälters (2) geöffnet ist, so dass die Sektoren (8) mit dem partikelförmigen Material (28) befüllbar sind.
9. Befüllvorrichtung (1) nach Ausführungsform 7 oder 8,
   **dadurch gekennzeichnet, dass**
   die Verteileinrichtung (3) modular aufgebaut ist, wobei die Verteileinrichtung (3) zumindest zwei konzentrische Module (22.1, 22.2, 22.3) aufweist, welche jeweils Sektoren (8) umfassen, wobei die Module stapelförmig übereinander angeordnet sind und die Auslassöffnungen (21) des ersten Moduls (22.1) auf einer ersten oberen Ebene und
   die Auslassöffnungen (21) des zweiten Moduls (22.2, 22.3) auf einer zweiten unteren Ebene angeordnet sind, wobei das obere Modul (22.1) einen größeren Durchmesser als das untere Modul aufweist (22.2, 22.3).
10. Befüllvorrichtung (1) nach Ausführungsform 9,
   **dadurch gekennzeichnet, dass**
   jedes der Module (22.1, 22.2, 22.3) zumindest einen Abschnitt (29.1, 29.2, 29.3) aufweist, der in Richtung des Zuführbehälters (2) geöffnet ist, so dass die Module (22.1, 22.2, 22.3) mit dem partikelförmigen Material (28) befüllbar sind.
11. Befüllvorrichtung (1) nach einer der vorhergehenden Ausführungsformen,
   **dadurch gekennzeichnet, dass**
   die Befüllvorrichtung (1) zumindest ein zwischen dem Zuführbehälter (2) und der Verteileinrichtung (3) angeordnetes Mittel (5) zum Steuern eines Durchflusses des partikelförmigen Materials (28) zu der Verteileinrichtung (3) umfasst.
12. Befüllvorrichtung (1) nach Ausführungsform 11,
   **dadurch gekennzeichnet, dass**
   das Durchflusssteuerungsmittel (5) eine Scheibe (13.1, 38.1) mit zumindest einer Öffnung (14.1, 39) umfasst, wobei die Scheibe (13.1, 38.1) einen Boden des Zuführbehälters (2) bildet, der bei der unteren Öffnung (2.2) des Zuführbehälters (2) angeordnet ist.
13. Befüllvorrichtung (1) nach Ausführungsform 11 oder 12,
   **dadurch gekennzeichnet, dass**
   das Durchflusssteuerungsmittel (5) ein Öffnungssteuerungsmittel (38.2) umfasst, welches relativ zu der Scheibe (38.1)) bewegbar ist und mittels welchem die Öffnung (39.1) derart abdeckbar ist, dass ein veränderbarer Durchlass (16) gebildet wird, durch den das partikelförmige Material (28) den Sektoren (8) der Verteileinrichtung (3) zuführbar ist.
14. Befüllvorrichtung (1) nach Ausführungsform 12,
   **dadurch gekennzeichnet, dass**
   das Öffnungssteuerungsmittel (38.2) eine zweite Scheibe mit zumindest einer Öffnung (40.1) und zumindest einem Steg (40.2) umfasst, wobei die Öffnung (39.1) der Scheibe (38.1) mit dem Steg (40.2) der zweiten Scheibe (38.2) zumindest teilweise abdeckbar ist.
15. Befüllvorrichtung (1) nach Ausführungsform 11 oder 12,
   **dadurch gekennzeichnet, dass**
   das Durchflusssteuerungsmittel (5)
   a) eine Scheibe (13.1) mit zumindest einer Öffnung (14.1) umfasst, wobei die Scheibe (13.1) einen Boden des Zuführbehälters (2) bildet, der bei der unteren Öffnung (2.2) des Zuführbehälters (2) angeordnet ist; und außerdem
   b) eine lösbar befestigte, und damit auswechselbare Gitterscheibe (47) umfasst, die zumindest die eine Öffnung (14.1) der Scheibe (13.1) partiell abdeckt.
16. Befüllvorrichtung (1) nach einer der Ausführungsformen 11 bis 14,
   **dadurch gekennzeichnet, dass**
   das Durchflusssteuerungsmittel (5) zumindest eine Stelleinrichtung (12) umfasst, wobei die Stelleinrichtung (12) einen Stellmotor (12.1) umfasst, der ein drehbares Stellrad (12.2) antreibt, und
   das Öffnungssteuerungsmittel (38.2) zumindest einen Abschnitt (41) umfasst, welcher Eingriffe (15) aufweist, in welche das Stellrad (12.2) eingreift, wobei durch Drehen des Stellrades (12.2) die Stellung des Öffnungssteuerungsmittels (38.2)relativ zu der Öffnung (39.1) der Scheibe (38.1) veränderbar ist.
17. Verfahren zum Befüllen eines Behälters mit einem partikelförmigen Material unter Verwendung einer Befüllvorrichtung (1) nach einer der Ausführungsformen 1 bis 16.

### B. Weitere Ausgestaltungen der Erfindung

Die erfindungsgemäße Vorrichtung ist insbesondere dadurch gekennzeichnet, dass die Verteileinrichtung mittels einer Antriebseinrichtung antreibbar ist, die außerhalb des Zuführbehälters angeordnet ist. Dadurch wird im Gegensatz zu den bekannten Vorrichtungen des Strandes der Technik besonders vorteilhaft vermieden, dass der Motor während des Befüllvorganges in störender Weise innerhalb des Zuführbehälters angebracht ist. Dadurch wird verhindert, dass das partikelförmige Material beim Einfüllen in den Zuführbehälter auf den Motor aufschlägt und dabei beschädigt wird. Zudem kann dadurch vorteilhafterweise bei gleichem Durchmesser des Zuführbehälters mehr Volumen für partikelmäßiges Material in dem Zuführbehälter bereitgestellt und damit der Füllvorgang beschleunigt werden.

Erfindungsgemäß ist die Verteileinrichtung mit dem Zuführbehälter drehbar verbunden. Dadurch kann die Verteileinrichtung mit Hilfe der außenliegenden Antriebseinrichtung gedreht werden. Dabei wird das partikelförmige Füllgut durch Zentrifugalkrafteinwirkung aus der Verteileinrichtung in den zu befüllenden Behälter ausgeworfen. Die jeweilige Wurfweite ist dabei über die Dreh- oder Rotationsgeschwindigkeit der Verteileinrichtung beeinflussbar. Je schneller sich die Verteileinrichtung dreht, desto schneller ist die Geschwindigkeit des partikelförmigen Materials an einem Ausgang der Verteileinrichtung. Die Geschwindigkeit am Ausgang der Verteileinrichtung wiederum beeinflusst, wie weit die Füllgut-Teilchen in den Behälter ausgeworfen wird.

Der Zuführbehälter kann dabei aus üblicherweise für derartige gattungsgemäße Vorrichtungen eingesetzten Materialien, wie beispielsweise aus Kunststoff oder Metall, wie insbesondere Stahl oder Aluminium, insbesondere einem rostfreien Edelstahl gefertigt sein.

In einer Ausgestaltung der erfindungsgemäßen Befüllvorrichtung ist die Antriebseinrichtung an einer Außenwand des Zuführbehälters seitlich versetzt angeordnet, insbesondere dort lösbar befestigt. Dadurch kann vorteilhafterweise vermieden werden, dass Überbrückungen, beispielsweise Kabel, oder Halterungen für die Antriebseinrichtung, den Partikelfluss im Inneren des Zuführbehälters stören würden. Dies führt zu einer kompakten Bauweise der Befüllvorrichtung, obwohl die Antriebseinrichtung außerhalb des Zuführbehälters angeordnet ist.

Weiterhin umfasst die Antriebseinrichtung einen Motor, insbesondere einen elektrischen, hydraulischen oder vorzugsweise pneumatischen Motor, der mit einem ersten Antriebsmittel gekoppelt ist, welches um die Drehachse der Verteileinrichtung drehbar ist. Dabei ist das erste Antriebsmittel mit der Verteileinrichtung verbunden. Insbesondere ist die Verteileinrichtung direkt an dem ersten Antriebsmittel befestigt. Dadurch kann die Verteileinrichtung mit Hilfe der Antriebseinrichtung gedreht werden.

In ihrer einfachsten Form ist die Verteileinrichtung im Wesentlichen teller- oder scheibenartig ausgebildet und besteht im Wesentlichen aus einer Platte, die eine Bodenplatte der Verteileinrichtung bildet. Die Verteileinrichtung verhindert, dass das in den Zuführbehälter während des Befüllvorgangs eingefüllte partikelförmige Material ungehindert in den zu befüllenden Behälter fällt ohne darin wesentlich verteilt zu werden, sondern wird durch diese seitlich radial nach Außen abgelenkt und dadurch im Behälter verteilt wird.

Weiterhin ist ein zweites Antriebsmittel am Motor ausgebildet, das mit dem ersten Antriebsmittel kommuniziert, wie z.B. in dieses direkt eingreift oder über ein weiteres Antriebsmittel antreibbar verbunden ist, so dass ein Drehmoment des zweiten Antriebsmittels auf das erste Antriebsmittel übertragbar ist. Dadurch lässt sich in besonders vorteilhafter Weise, trotz der Anordnung der Antriebseinrichtung außerhalb des Zuführbehälters, ein drehbarer Antrieb der Verteileinrichtung realisieren.

Das erste Antriebsmittel ist insbesondere zwischen dem Zuführbehälter und der Verteileinrichtung angeordnet und das Drehmoment des zweiten Antriebsmittels wird über das ersten Antriebsmittels auf die Verteileinrichtung übertragen, welche mit dem ersten Antriebsmittel verbunden ist. Beispielsweise erfolgt der Antrieb über Zahnräder, und dabei umfasst das erste Antriebsmittel ein Zahnrad und das zweite Antriebsmittel ein Ritzel, welche in das Zahnrad eingreift.

Insbesondere ist der Antrieb aber als Riemenantrieb ausgebildet und dabei umfasst das erste Antriebsmittel eine angetriebene Riemenscheibe und das zweite Antriebsmittel eine antreibende Riemenscheibe, wobei die Riemenscheiben mittels eines Antriebsriemens kommunizieren. Der erfindungsgemäß ausgebildete Riemenantrieb kann dabei in an sich bekannter Weise, je nach Wunsch, in unterschiedlicher Art, z.B. als Flachriemen-, Keilriemen-, Keilrippenriemen-, Zahnriemen- oder Rundriemenantrieb ausgebildet sein. Die Riemenführung kann dabei in an sich bekannter Weise gekreuzt, habgekreuzt (geschränkt) oder, vorzugsweise, offen ausgebildet sein. Der Riemenantrieb kann gegebenenfalls eine Nachspannmöglichkeit aufweisen und in an sich bekannter Weise als Dehnungsgetriebe, Spannrollengetriebe oder Spannwellengetriebe ausgebildet sein. Der Riemenantrieb kann zudem einstufig oder zwei- oder mehrstufig verstellbar ausgebildet sein. Bei mehrstufigen Antrieben kann z.B. die antreibende Riemenscheibe als Stufenscheibe ausgebildet sein.

In einer anderen Ausgestaltung weist die Verteileinrichtung, insbesondere deren eine oder mehrere Bodenplatten, eine Vielzahl von Sektoren auf, die von der Drehachse der Verteileinrichtung radial nach außen, d.h. in Richtung der Innenwandung des zu befüllenden Behälters, gerichtet sind. Die Sektoren werden durch radial angeordnete Trennelemente (insbesondere Trennwände) gebildet. Dabei stehen die Trennelemente im Wesentlichen senkrecht auf der Bodenplatte und verlaufen zur Drehachse radial, z.B. in oder entgegen der Drehrichtung gekrümmt, nach außen, so dass zwischen jeweils zwei Trennelementen eine Auslassöffnung für das in die Sektoren gelangte partikelförmige Material gebildet wird. Durch die Einteilung der Verteileinrichtung in Sektoren und die Trennung der Sektoren durch Trennelemente kann vorteilhafterweise das partikelförmige Material bereits in der Verteileinrichtung in gewünschter Weise, vorzugsweise gleichmäßig, portionsweise aufgeteilt werden. Dabei kann durch eine portionsweise Aufteilung partikelförmigen Materials in der Verteileinrichtung auch eine gleichmäßige Verteilung in den Behälter und damit ein möglichst homogener Aufbau der Materialschicht im Reaktorbehälter begünstigt werden. Die Trennelemente sind beliebig formbar, sind aber insbesondere als im Wesentlichen vertikale Trennwände ausgestaltet und vertikal auf der Bodenplatte der Verteileinrichtung aufgesetzt. Die so gebildeten Segmente besitzen dadurch einen U-förmigen Querschnitt. Zudem kann durch eine gleichmäßige radiale Verteilung der Trennwände ein einheitliches Volumen in den Sektoren eingestellt werden. Die Sektoren können zudem nach oben ganz oder zumindest teilweise offen ausgebildet sein.

Die Sektorenlängen können dabei beispielsweise gleich lang sein. In diesem Fall ist die Bodenplatte der Verteileinrichtung kreisscheibenförmig ausgestaltet. Alternativ können sich die Sektorenlängen voneinander unterscheiden. Dies ist beispielsweise dann der Fall, wenn die Bodenplatte der Verteileinrichtung einen spirallinienförmigen Umriss aufweist. Dies bedeutet, dass sich die Umfangslinie der Bodenplatte von der Drehachse entfernt. Beispielsweise kann die Bodenplatte aus zwei Halbspiralen zusammengesetzt sein. Ob die Sektorenlängen gleich lang oder unterschiedlich lang sind ist daher abhängig von der Geometrie der Bodenplatte.

Die Anzahl und die Größe der Sektoren sind frei wählbar; sie werden aber abhängig von der Größe der Partikel des partikelförmigen Füllmaterials ausgebildet. Je größer die Partikel sind, desto größer sollten auch die Sektoren sein, um ein Verstopfen der Verteileinrichtung zu verhindern und um eine ausrauchende Anzahl von Materialpartikeln aufnehmen zu können.

Die Verteileinrichtung kann aus üblicherweise für derartige gattungsgemäße Vorrichtungen eingesetzten Materialien, wie beispielsweise aus Kunststoff oder Metall, wie insbesondere Kunststoff, wie z.B. Polyethylen, gefertigt sein.

Zudem kann in den Sektoren jeweils zumindest ein Zwischentrennelement angeordnet sein, welches die Sektoren in Untersektoren unterteilt. Die Zwischentrennelemente können dabei ebenso im Wesentlichen vertikale Zwischentrennwände sein. Die Zwischentrennelemente können zudem eine geringere Höhe als die Trennelemente aufweisen. Durch die Aufteilung der Sektoren in Untersektoren kann vorteilhafterweise eine noch gleichmäßigere Verteilung des partikelförmigen Materials in den Sektoren selbst gewährleistet werden.

In einer bevorzugten Ausgestaltung der Erfindung weisen die Sektoren der Verteileinrichtung eine Sektorenöffnung auf, die in Richtung des Zuführbehälters weist, so dass die Sektoren der während des Befüllvorgangs rotierenden Verteilvorrichtung, mit dem partikelförmigen Material befüllbar sind. Die Sektoren nehmen so aus dem Innenraum des Zuführbehälters das partikelförmige Material auf. Das partikelförmige Material wird den Sektoren auf diese Weise von oben zugeführt, Die Befüllung kann dabei diskontinuierlich, portionsweise, insbesondere aber kontinuierlich erfolgen.

Weiterhin ist die Verteileinrichtung einstückig, d.h. aus einem einzigen Verteilmodul oder mehrteilig modular aufgebaut sein. Sie kann dabei zumindest zwei, wie z.B. 2, 3, 4, oder 5, insbesondere 3 konzentrische Module aufweisen, welche jeweils eine Vielzahl der oben beschriebenen radialen Sektoren umfassen. Die Module sind stapelförmig übereinander und entlang der Drehachse der Verteilvorrichtung angeordnet. Die Module sind vorzugsweise miteinander lösbar verbunden, wie z.B. verschraubt. Die Einzelmodule der Verteilvorrichtung drehen sich somit während des Betriebs mit gleicher Rotationsgeschwindigkeit. Im Falle eines solchen modularen Aufbaus sind die Auslassöffnungen der Sektoren des ersten Moduls auf einer ersten Ebene und die Auslassöffnungen der Sektoren des zweiten Moduls auf einer zweiten Ebene angeordnet, wobei die erste Ebene oberhalb der zweiten Ebene angeordnet ist. Die Module weisen beispielsweise unterschiedlich große Durchmesser auf. Bevorzugt weist das obere Modul einen größeren Durchmesser auf als das untere Modul. Dadurch wird verhindert, dass partikelförmiges Material von dem oberen Modul zunächst auf das untere Modul und dann erst in den Behälter ausgeworfen wird.

Die Module sind beispielsweise ringförmig ausgebildet. Jedes der Module weist dann einen unterschiedlichen Innendurchmesser auf, wobei der Innendurchmesser des ersten, oberen Moduls größer als der Innendurchmesser des zweiten unteren Moduls ist. Entsprechend verjüngt sich der Innendurchmesser jedes weiteren, folgenden Moduls. Dadurch ist gewährleistet, dass jeder Sektor zum Inneren des Zuführbehälters hin geöffnet ist und somit portionsweise partikelförmiges Material aufnehmen kann. Weiterhin kann sich der Außendurchmesser ausgehend von der Drehachse kontinuierlich vergrößern, so dass ein Modul eine spiralenringförmige Geometrie aufweist. Außerdem können die Außendurchmesser der einzelnen Sektoren stufenförmig verändert sein, so dass sich kürzere und längere Sektoren entlang des Modulumfangs abwechseln

Insbesondere ist auch der Außendurchmesser des ersten, oberen Moduls größer als der Außendurchmesser des zweiten Moduls. Dadurch kann vorteilhafterweise verhindert werden, dass das gesamte partikelförmige Material die gleiche Wurfweite aus der Verteileinrichtung aufweist. Es wird also auch dadurch eine gleichmäßige Verteilung des partikelförmigen Materials in dem Behälter gewährleistet.

Zudem kann jedes der Module zumindest einen Abschnitt aufweisen, der in Richtung des darüber angeordneten Zuführbehälters geöffnet ist, so dass die Module mit dem partikelförmigen Material befüllbar sind. Diese Abschnitte werden dann insbesondere von den in Richtung des Zuführbehälters geöffneten Sektoren gebildet.

In einer weiteren Ausgestaltung umfasst die Befüllvorrichtung ein zwischen dem Zuführbehälter und der Verteileinrichtung angeordnetes Mittel zum Steuern eines Durchflusses des partikelförmigen Materials zu der Verteileinrichtung. Mit einem solchen Durchflusssteuerungsmittel wird gewährleistet, dass es in der Verteileinrichtung nicht zu Verstopfungen während der Zufuhr des partikelförmigen Materials kommt. Zudem sorgt das Durchflusssteuerungsmittel für eine besonders gleichförmige Verteilung des partikelförmigen Materials in der Verteileinrichtung und somit letztendlich für eine gleichmäßige Verteilung des partikelförmigen Materials in dem Behälter.

Das Durchflusssteuerungsmittel umfasst insbesondere eine Scheibe mit zumindest einer in ihrer Größe variablen, insbesondere verstellbaren Durchlassöffnung, wobei die Scheibe einen Boden des Zuführbehälters bildet, der bei der unteren Öffnung des Zuführbehälters angeordnet ist. Die Form der Scheibe ist dabei an die Form des Zuführbehälters angepasst. Ist also der Zuführbehälter ein Kreiszylinder, ist die Scheibe eine Kreisscheibe, die derart als Boden des Zuführbehälters angeordnet ist, dass sie die untere Öffnung des Zuführbehälters vollständig abdeckt. Die zumindest eine Öffnung in der Scheibe ermöglicht jedoch, dass trotzdem partikelförmiges Material in die Verteileinrichtung gelangt.

In einer ersten Ausführungsform umfasst das Durchflusssteuerungsmittel zusätzlich wenigstens eine gitterartige Wechselscheibe, die zur Optimierung des jeweiligen Befüllvorganges z.B. aus einem Satz vorgefertigter Gitterscheiben, gewöhnlich vor Beginn der Befüllung, ausgewählt wird. Sie wird auf die erste, den Boden des Zuführbehälters bildendenden, unteren Scheibe mit wenigstens einer, vorzugsweise jedoch einer Vielzahl von konzentrisch angeordneten, vordefinierten Durchlassöffnungen, vorzugsweise von oben, aufgesetzt. Dadurch kann die Durchflussmenge des jeweiligen Füllguts die den einzelnen Modulen (und den Sektoren davon) der Verteileinrichtung zugeführt wird, optimal eingestellt werden. Dabei sind die konzentrischen ringförmigen Stege der ausgewählten Gitterscheibe so ausgebildet, dass sie die Durchlassöffnungen der ersten Scheibe partiell abdecken und so die Durchflussmenge an Füllgut für die einzelnen Module der Verteileinrichtung in vordefinierter Wiese verringern. Eine sektorenweise Verstellung während des Befüllvorganges ist nicht erforderlich. Dadurch lässt sich eine sehr viel einfacher konstruierte Befüllvorrichtung bereitstellen, die aufgrund der einfach auszutauschenden Wechselscheiben genau so vielfältig einsetzbar ist und ebenso zuverlässig Füllresultate hoher Qualität liefert, wie andere hierin beschriebenen Befüllvorrichtungen mit externen Stelleinrichtungen zur Veränderung der Durchflussmenge während des jeweiligen Befüllvorganges.

Insbesondere umfasst eine solche Wechselscheibe ringförmige, konzentrisch angeordnete Stege und dazwischen angeordnete radiale Stege. Die so gebildete Gitterstruktur wird derart über der Bodenscheibe der Befüllvorrichtung so angeordnet, dass die ringförmigen Stege die Öffnungen der Bodenscheibe zumindest teilweise bedecken.

Über die jeweilige Breite der ringförmigen Stege der Gitterscheibe werden die Größen der effektiven Durchlassöffnungen für das Füllgut bestimmt. Dabei können die Breiten der ringförmigen Stege gleich oder verschieden sein und so gewählt werden, dass sie die Öffnungen in der Bodenscheibe zu einem Prozentsatz von 1 bis 99%, wie z.B. 5 bis 50 oder 10 bis 30% bedecken. Beispielsweise bedecken die ringförmigen Stege diese Öffnungen zu 10 oder 20%, so dass die Durchlässe nur noch eine Größe von 90 bzw. 80% der Größe der ursprünglichen Öffnung in der Bodenscheibe besitzen. Sollen die Öffnungen der Bodenscheibe zu einem anderen Prozentsatz bedeckt werden, wird die Gitterscheibe durch eine andere Gitterscheibe ausgetauscht, deren ringförmige Stege eine dem gewünschten Bedeckungsgrad entsprechende Breite aufweisen. Auf diese Weise lässt sich die den einzelnen Sektoren bzw. Modulen der Verteileinrichtung zugeführte Füllgutmenge bedarfsgereicht voreinstellen. Vorzugsweise wird ein Satz von unterschiedlichen Wechselscheiben vorgefertigt, aus dem entsprechend den wesentlichen Parametern eines speziellen Füllvorgangs, wie z.B. Art der Füllgutpartikel, Füllgeschwindigkeit, Geometrie des zu befüllenden Behälters (wie z.B. Reaktors) vor Beginn des Füllvorgangs eine spezielle Gitterscheibe ausgewählt und in die erfindungsgemäße Vorrichtung eingesetzt wird, so dass auf diese Weise ein optimales Füllergebnis garantiert werden kann.

Die Gitterscheibe ist vorzugsweise mit der Bodenscheibe lösbar verbunden. Sie kann beispielsweise über Schraubverbindungen mit der Bodenscheibe verbunden werden. Eine andere Möglichkeit besteht in der Ausbildung wenigstens zweier, nach oben weisenden Zapfen auf der Bodenscheibe, welche in korrespondierende Ausnehmungen, der Gitterscheibe oder Gitterscheiben, eingreifen. So lassen sich alle Scheiben eines Wechselscheiben-Satzes in gleicher Weise mit der Bodenscheibe lösbar verbinden.

In einer weiteren Ausführungsform umfasst das Durchflusssteuerungsmittel ein Öffnungssteuerungssmittel, welches relativ zu der Bodenscheibe bewegbar ist und mittels welchem die Öffnung (Öffnungen) der Bodenscheibe derart abdeckbar ist (sind), dass ein variabel einstellbarer Durchlass gebildet wird, durch den das partikelförmige Material den Sektoren der Verteileinrichtung kontrolliert und während des Füllvorgangs regulierbar zuführbar ist. Dadurch kann vorteilhafterweise ein in seiner Größe veränderbarer Durchlass bereitgestellt werden, über welchen der Durchfluss an partikelförmigem Material aktiv (z.B. manuell oder elektrisch) gesteuert werden kann.

In einer Ausgestaltung davon umfasst das Öffnungssteuerungsmittel eine zweite Scheibe mit zumindest einer Öffnung und zumindest einem Steg. Dabei ist die Öffnung der ersten Scheibe mit dem Steg der zweiten Scheibe zumindest teilweise abdeckbar. In dieser einfachsten Ausführungsform des Durchflusssteuerungsmittels sind zwei komplementär zueinander ausgebildete Scheiben gegeneinander bewegbar, insbesondere drehbar. Dadurch kann die Größe eines Durchlasses durch eine einfache Drehung der zweiten Scheibe gegenüber der ersten Scheibe bestimmt werden.

In noch einer anderen Ausführungsform umfasst das Öffnungssteuerungsmittel mehrere Blenden, wobei jeweils eine Blende die Größe einer Sektorenöffnung der Verteileinrichtung aufweisen kann. Alternativ können auch mehrere Blenden gemeinsam die Größe einer Sektorenöffnung aufweisen. Dadurch können einzelne oder Gruppen von Sektoren der Verteileinrichtung einzeln und unabhängig voneinander geschlossen werden. Dies wiederum ermöglicht eine Feinsteuerung des Durchflusses des partikelförmigen Materials zu der Verteileinrichtung. Eine Ausführungsform eines solchen variablen, manuell einstellbaren Durchflusssteuerungsmittels ist z.B. in der US2013/0298507 ausführlich beschrieben, worauf hiermit Bezug genommen wird.

In einer weiteren Ausgestaltung umfasst die Durchflusssteuerung zumindest eine Stelleinrichtung, mittels welcher eine Position der oben beschriebenen Öffnungssteuerungsmittel, relativ zu der oder den Öffnungen der ersten Scheibe einstellbar ist. Mittels einer solchen Stelleinrichtung kann die Größe des Durchlasses und damit der Partikeldurchfluss auf einfache Art und Weise von außen reguliert werden.

In einer Ausführungsform davon umfasst die Stelleinrichtung insbesondere einen Stellmotor, der ein drehbares Stellrad antreibt. Das Öffnungssteuerungsmittel umfasst zumindest einen Abschnitt, welcher Eingriffe aufweist, in welche das Stellrad eingreift. Dabei ist durch Drehen des Stellrades die Stellung der Öffnungssteuerungsmittel, also insbesondere der zweiten Scheibe oder der Blenden, relativ zu der Öffnung der Scheibe veränderbar. Durch die Verwendung eines Stellmotors kann die weitere Scheibe oder können die Blenden insbesondere elektrisch verstellt werden. Dadurch kann eine Feineinstellung der Größe des Durchlasses auf einfache Weise realisiert werden.

Weiterhin kann in einer anderen Ausführungsform der erfindungsgemäßen Befüllvorrichtung in deren Zuführbehälter zusätzlich eine Leiteinrichtung angeordnet, z.B. an der Seitenwand des Behälters befestigt, sein, welche das partikelförmige Material durch den Zuführbehälter zu der Verteileinrichtung leitet. Dies verhindert, dass das partikelförmige Material während des Befüllvorgangs nicht ungehindert durch den Zuführbehälter mit hoher Geschwindigkeit auf die Durchflusssteuerung oder die Verteileinrichtung trifft und dabei beschädigt wird. Die Leiteinrichtung gewährleistet vorteilhafterweise, dass das partikelförmige Material unbeschädigt der Verteileinrichtung zugeführt werden kann und gleichmäßiger auf die Sektoren verteilt wird. Die Leiteinrichtung kann unabhängig vom Material des Zuführbehälters, aus den gleichen Materialen wie dieser gefertigt sein.

Die Leiteinrichtung umfasst dabei insbesondere ein zwischen der oberen und der unteren Öffnung des Zuführbehälters spiralförmig ausgebildetes Leitblech. Dabei kann eine derartige Leiteinrichtung über die Länge des Zuführbehälters wenigstens eine oder mehrere Spiraldrehungen ausführen. Weiterhin kann das spiralförmige Leitblech beliebig breit ausgebildet sein, so dass es in der Draufsicht die Verteileinrichtung im Inneren des Zuführbehälters ganz oder teilweise verdeckt.

Weiterhin kann das Leitblech auch zur Längsachse des Zuführbehälters hin in oder entgegen der Fallrichtung der Partikel geneigt sein.

Weiterhin kann die Leiteinrichtung aus einer Mehrzahl von in dem Zuführbehälter versetzt angeordneten blattförmigen Leitelementen bestehen, welche in der Draufsicht die Verteileinrichtung im Inneren des Zuführbehälters ganz oder teilweise verdecken, und den freien Durchgang der Partikel durch den Zuführbehälter verhindern und somit die Durchgansgeschwindigkeit verlangsamen.

Schließlich ist auch denkbar, im Inneren des Zuführbehälters Falldämpferelemente fest auszubilden oder während des Befüllvorgangs einzuführen, wie sie aus dem Stand der Technik bekannt sind. In der EP-A-1 749 568 sind z.B. dreidimensionale partikeldurchlässige Netzgebilde beschrieben; aus der EP-A-0 588 999 und der US 6,467,513 sind bürstenförmige falldämpfende Elemente bekannt. Auf die Offenbarung dieser Druckschriften wird hiermit ausdrücklich Bezug genommen.

Die Erfindung betrifft ferner ein Verfahren zum Befüllen eines Behälters mit einem partikelförmigen Material unter Verwendung einer wir hierin beschriebenen Befüllvorrichtung.

Die Erfindung wird nun anhand von Ausführungsbeispielen unter Bezugnahme auf die Figuren näher erläutert, ohne die Erfindung jedoch auf diese zu beschränken.

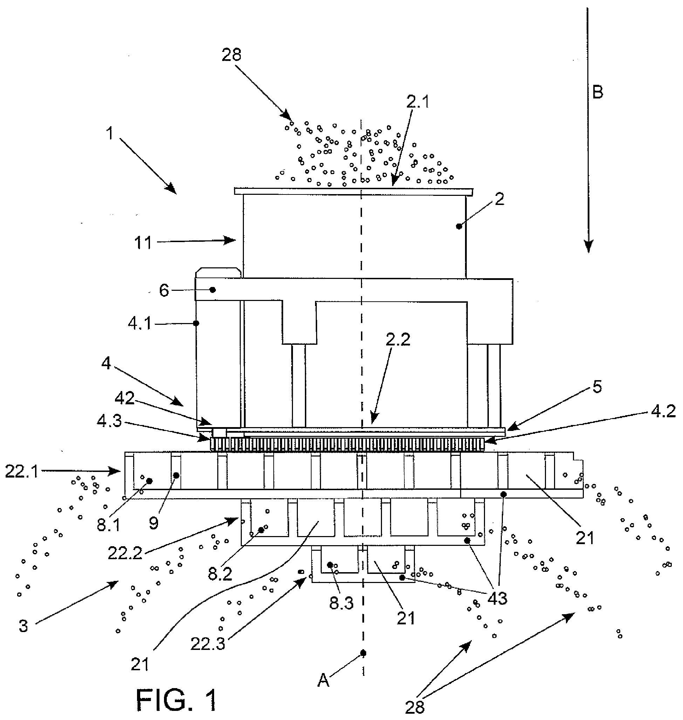

Unter Bezugnahme auf Figur 1 wird ein Ausführungsbeispiel der erfindungsgemäßen Befüllvorrichtung 1 erläutert.

Die Befüllvorrichtung 1 umfasst einen Zuführstutzen oder Zuführbehälter 2, welcher mit partikelförmigem Material 28 befüllbar ist. Dieser ist während des Befüllvorgangs in dem zu befüllenden Behälter, z.B. einem chemischen einem Reaktor, angeordnet. Das partikelförmige Material 28 umfasst Katalysatorteilchen die von oben in Befüllrichtung B, z.B. über eine flexible Schlauchleitung in den Zuführbehälter kontrolliert eingeleitet werden.

Der Zuführbehälter 2 weist zudem eine obere 2.1 und eine untere Öffnung 2.2 auf. Durch die obere Öffnung 2.1 des Zuführbehälters 2 wird das partikelförmige Material 28 in den Zuführbehälter 2 in Befüllrichtung B eingefüllt. Durch die untere Öffnung 2.2 kann das partikelförmige Material 28 aus dem Zuführbehälter 2 austreten. Die Seitenwandung des Zuführbehälters 2 ist dabei als ein oben und unten offener Zylinder ausgebildet.

Bei der unteren Öffnung 2.2 ist ein Durchflusssteuerungsmittel 5 angeordnet. Insbesondere ist dieses betätigbar angeordnet, und zwar derart, dass über die untere Öffnung 2.2 des Zuführbehälters mittels des Durchflusssteuerungsmittels 5 der Durchfluss des partikelförmigen Materials 28, welches den Zuführbehälter 2 verlässt, steuerbar ist. Der Durchfluss ist dabei als diejenige Menge an partikelförmigem Material 28, die pro Zeiteinheit den Zuführbehälter 2 verlässt, definiert.

Zudem umfasst die Befüllvorrichtung 1 eine Antriebseinrichtung 4 mit deren Hilfe die Verteileinrichtung 3 angetrieben, insbesondere in eine Drehbewegung um deren Drehachse A kontrolliert versetzt werden kann.

Die Antriebseinrichtung 4 umfasst einen Motor 4.1. Der Motor 4.1 wiederum ist mit zwei Antriebsmitteln 4.2 und 4.3 gekoppelt. Das erste Antriebsmittel 4.2 ist in ddieser Ausgestaltung als Zahnrad und das zweite Antriebsmittel 4.3 ist als Ritzel ausgebildet.

Im vorliegenden Beispiel ist der Motor 4.1 ein pneumatischer Motor, also ein Druckluftmotor. Der Druckluftmotor umfasst einen Kolben, der durch einströmende Druckluft in Rotation versetzt wird. Diese Rotation wird durch eine Kolbenstange, an deren unterem Ende das Ritzel 4.3 angebracht ist, übertragen. Das Ritzel 4.3 wiederum greift in das Zahnrad 4.2 ein. Die Rotation des Motors 4.1 wird daher über das Ritzel 4.3 auf das Zahnrad 4.2 übertragen, so dass das Zahnrad 4.2 mittels des Ritzels 4.3 und der Kolbenstange mit dem Motor 4.1 drehbar verbunden ist.

Der Motor 4.1 ist mittels eines Haltemittels 6 an der Außenseite der Seitenwand 11 des Zuführbehälters 2 befestigt.

Weiterhin ist das Zahnrad 4.2 mit der Verteileinrichtung 3 verbunden. Die Drehbewegung des Zahnrads 4.2 wird damit auf die Verteilvorrichtung 3 übertragen.

Das Durchflusssteuerungsmittel 5 weist ein Loch oder eine Bohrung 42 auf, durch welches dien Kolbenstange des Motors und das Ritzel 4.3 hindurchgeführt wird. Dadurch kann eine stabile Befestigung des Durchflusssteuerungsmittels 5 zwischen dem Zuführbehälter 2 und der Verteileinrichtung 3 gewährleistet werden.

Die Verteileinrichtung 3 weist drei konzentrische ringförmige Module 22.1 bis 22.3 auf. Die drei Module 22.1 bis 22.3 werden dabei von jeweils einer Bodenplatte 43 gebildet, auf welchen Trennelemente 9 im Wesentlichen vertikal aufgesetzt sind. Durch die Trennelemente werden auf jeder Ebene Sektoren 8.1 bis 8.3 ausgebildet, welche wiederum Auslassöffnungen 21 bilden.

Die z.B. ringförmig ausgebildeten Module 22.1 bis 22.3 sind dabei stapelförmig übereinander angeordnet. Dadurch ergibt sich, dass Auslassöffnungen 21, die von den Sektoren 8 des ersten 22.1, zweiten 22.2 und dritten ringförmigen Moduls 22.3 gebildet werden, auf drei unterschiedlichen Ebenen liegen.

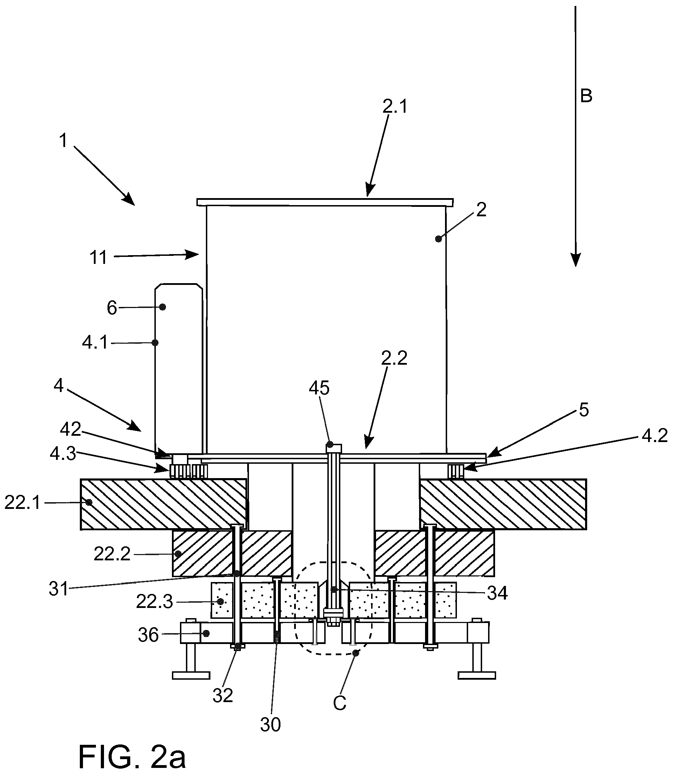

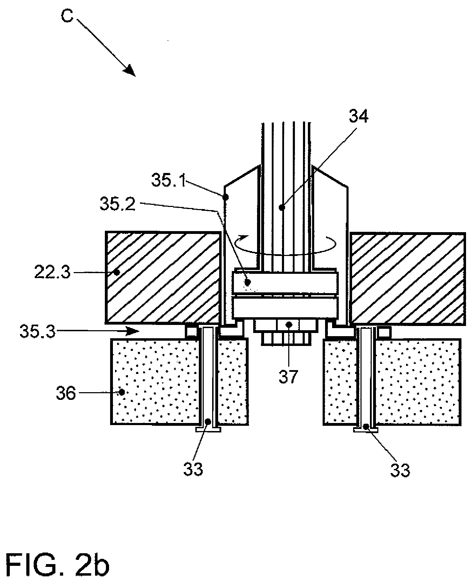

Mit Bezug zu den Figuren 2a, 2b wird die Befestigung der Verteileinrichtung 3 an der Befüllvorrichtung 1 erläutert.

Unterhalb des dritten ringförmigen Moduls 22.3 ist ein Befestigungselement 36 angeordnet. Dieses weist Standfüße 36.1 auf, welche es ermöglichen, dass die Befüllvorrichtung 1 abgestellt werden kann, wenn sie beispielsweise zur Wartung aus dem Behälter herausgenommen wird. Jedes der drei Module 22.1 bis 22.3 und das Befestigungselement 36 weisen eine oder mehrere Befestigungsbohrungen auf. Die Module 22.1 bis 22.3 und das Befestigungselement 36 werden derart übereinander angeordnet, dass die Bohrungen direkt übereinander liegen. Dadurch kann eine Schraube 31 durch die Bohrungen geführt werden. An der Seite des Befestigungselements 36 wird die Schraube 31 dann durch eine Mutter 32 befestigt. Die Befestigung der drei Module 22.1 bis 22.3 aneinander und an dem Befestigungselement 36 durch eine Schraube 31 und eine Mutter 32 kann dabei an mehreren Stellen, insbesondere an drei Stellen, gleichmäßig verteilt über die Verteileinrichtung 3, erfolgen.

Zusätzlich weisen das dritte Modul 22.3 und das Befestigungselement 36 wenigstens eine zweite Befestigungsbohrung auf. Durch die Anordnung des dritten Moduls 22.3 relativ zu dem Befestigungselement 36 sind auch die zweiten Bohrungen direkt übereinander angeordnet. Die zweiten Bohrungen weisen zudem Gewinde auf. Eine Schraube 30 wird dann durch die Bohrungen geschraubt und durch die Gewinde in dem dritten Modul 22.3 und dem Befestigungselement 36 festgehalten. Dadurch wird die Verteileinrichtung 3 stabiler an dem Rest der Befüllvorrichtung 1 befestigt. Auch diese Befestigung kann an mehreren Stellen gleichmäßig über das dritte Modul 22.3 und das Befestigungselement 36 verteilt werden.

Zur Befestigung der Verteileinrichtung 3 an dem Zuführbehälter 2 weist die Durchflusssteuerung 5 in dieser Ausführungsform eine mittige, starre Achse 34 mit kreisförmigem Querschnitt auf, die an beiden Enden mit einem Schraubgewinde versehen ist. Die Achse 34 ist dabei relativ zu dem Zuführbehälter 2 derart angeordnet, dass sie durch die Drehachse A verläuft. Die starre Achse 34 verläuft insbesondere ausgehend von der Durchflusssteuerung 5 nach unten. Zudem weist die Durchflusssteuerung 5 in der Mitte eine Bohrung auf, durch welche das obere Gewindeende der Achse 34 hindurchtritt. Dadurch reicht die Achse 34 bis in den Zufuhrbehälter 2 und wird dort von oben mittels einer oberen Mutter 45 befestigt, insbesondere fest verschraubt.

Am unteren Ende der Achse 34 ist ein Drehlager 35 angeordnet und mit dieser so verbunden, dass das Drehlager 35 um die starre Achse 34 drehbar ist.

Zur besseren Veranschaulichung des unteren Abschnitts der Achse 34 mit dem Drehlager 35 wird der Ausschnitt C aus Figur 2a vergrößert in Figur 2b dargestellt. Das Drehlager 35 umfasst dabei drei schematisch dargestellte Bauteile 35.1 bis 35.3. Das Drehlager 35 umfasst insbesondere ein äußeres drehbares, z.B. hülsenförmiges, nach oben sich in etwa konisch verjüngendes Element 35.1, welches in seinem unteren Ende eine Ausnehmung aufweist, in das ein ringförmiges Kugellager 35.2 eingepasst ist, das einen unteren verjüngten Abschnitt der Achse 34 formschlüssig umfasst. Das ringförmige Kugellager 35.2 umfasst ein Gehäuse mit ringförmiger Außenwand und ringförmiger Innenwand. Insbesondere ist der äußere Ring des Kugellagergehäuses in die untere Ausnehmung des Elements 35.1 formschlüssig eingepasst. Beispielsweise können dies beiden Teile miteinander verklebt sein. Das als Flansch ausgebildete Befestigungselement 35.3 sichert den Sitz des Kugellagers von unten, indem es gegen dessen ringförmige Außenwand drückt. Das Kugellager 35.2 wird zudem auf den unteren verjüngten Abschnitt der Achse 34 soweit aufgeschoben, bis dessen Innenwand einen ebenfalls an der Achse 34 ausgebildeten Anschlag (Absatz), der in Figur 2b nicht gezeigt ist, berührt. Vorzugsweise umschließt die Innenwand formschlüssig das untere, verjüngte Ende der Achse 34 soweit, dass das untere Schraubgewinde der Achse 34 aus dem Kugellager 35.2 soweit hervortritt, dass die untere Mutter 37 aufgeschraubt werden kann, bis diese den inneren Ring des Kugellagergehäuses beaufschlagt, ohne die Drehbewegung des Hülse 35.1 und des damit verbundenen Flansches 35.3 zu beeinträchtigen.

Der Flansch 35.3 weist zudem eine mittige Öffnung auf, die so bemessen ist, dass das untere mit einem Schraubgewinde versehene Ende der Achse 34 mit der Mutter 37 verschraubbar ist.

Derartige Drehlager 35 sind beispielsweise in der EP 2 851 575 A1 beschrieben, die hiermit durch Bezugnahme in die vorliegende Anmeldung aufgenommen wird. Geeignete Drehlager sind auch von der Firma SKF Deutschland erhältlich.

Der Flansch 35.3 wiederum weist eine oder mehrere seitliche Bohrungen mit Innengewinde auf und das Befestigungselement 36 weist die gleiche Anzahl von dritten Bohrungen auf. Die beiden Elemente 35.3 und 36 sind derart zueinander angeordnet, dass diese Bohrungen direkt übereinander liegen. Durch die Bohrungen im Befestigungselement 36 werden dann wiederum Befestigungsschrauben 33 geführt und mit den Gewindebohrungen des Flansches 35.3 verschraubt. Dadurch wird das Drehlager 35 an dem Befestigungselement 36 befestigt, so dass dieses zusammen mit den ebenfalls daran befestigten ringförmigen Modulen 22.1 bis 22.3 (vgl. Figur 2a) der Verteileinrichtung 3 um die Achse 34 drehbar ist.

Diese Variante des Zusammenbaus einer erfindungsgemäßen Befüllvorrichtung 1 ermöglicht, dass die gesamte Verteileinrichtung 3 um die Achse 34 drehbar am Zuführbehälter 2 befestigt ist.

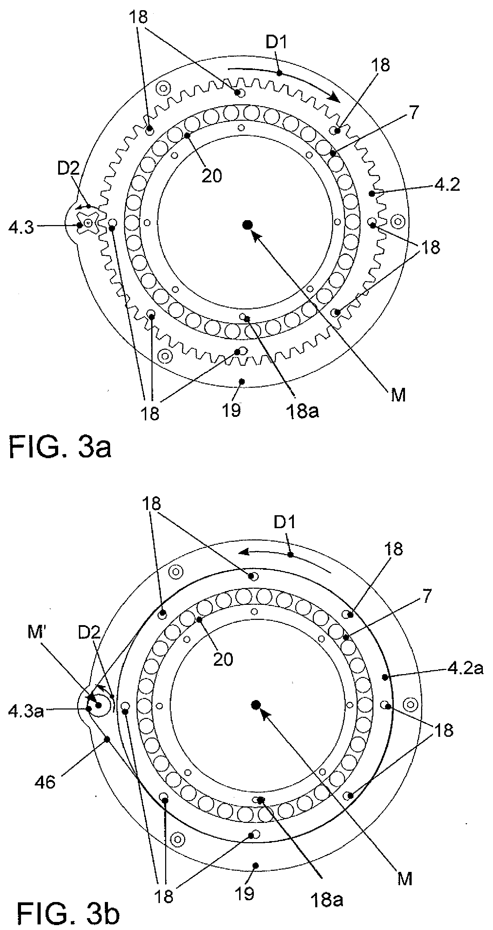

Zur Befestigung der Verteileinrichtung 3 an dem Zuführbehälter 2 kann aber in einer anderen, nicht dargestellten Ausgestaltung der erfindungsgemäßen Vorrichtung (gemäß der Figur 1) so verfahren werden, dass man die Verteileinrichtung 3 nur mit dem Antriebsmittel (vgl. 4.2 bzw. 4.2a in den folgenden Figuren 3a und 3b dargestellt) verschraubt, so dass die mittige Achse 34 und das Drehlager 35 entbehrlich sind. Beispielsweise kann man das in Figur 2a dargestellte obere ringförmige Modul 22.1 an den Verschraubungspunkten 18 (in den Figuren 3a und 3b dargestellt) der Antriebsmittel 4.2 bzw. 4.2a mittels Schrauben befestigen.

In Figur 3a ist ein Ausführungsbeispiel für eine Anordnung des Ritzels 4.3 relativ zu dem Zahnrad 4.2 gezeigt. Das Ritzel 4.3 mit Drehrichtung D2 greift in das Zahnrad 4.2 ein und überträgt so sein Drehmoment auf das Zahnrad 4.2. Dadurch wird das Zahnrad 4.2 um die Drehachse A in Drehrichtung D1 gedreht. Das Zahnrad 4.2 ist radialsymmetrisch um den Mittelpunkt M angeordnet, durch welchen die Drehachse A verläuft. Die Drehachse A ist insbesondere senkrecht zum Zahnrad 4.2 selbst ausgerichtet. Zudem verläuft die Drehachse A vertikal durch den Zuführbehälter 2.

Das Zahnrad 4.2 und das Ritzel 4.3 sind zudem unter einer Abdeckung 19 angeordnet. Die Abdeckung 19 sorgt dafür, dass die Antriebsmittel 4.2 und 4.3 von außen nicht sichtbar sind und zudem vor Verunreinigung z.B. durch Staub geschützt sind. Das Zahnrad 4.2 wird über ein Kugellager 7 betrieben um die Reibung während des Betriebs zu minimieren. An der Innenwand 20 des Kugellagers sind Verschraubungspunkte 18a vorgesehen, mittels welcher eine Schraubverbindung mit dem unteren Ende des Zuführbehälters 2 ausgebildet sein kann.

In Figur 3b ist ein weiteres, bevorzugtes, Ausführungsbeispiel für einen Antrieb der Verteileinrichtung (3) mittels Bandantrieb gezeigt. Die antreibende Riemenscheibe 4.3a mit Drehrichtung D2 kommuniziert über den Antriebsriemen 46 mit der angetriebenen Riemenscheibe 4.2a und überträgt so sein Drehmoment auf die Riemenscheibe 4.2a. Dadurch wird die Riemenscheibe 4.2a um die Drehachse A in Drehrichtung D1 gedreht. Die Riemenscheibe 4.2a ist radialsymmetrisch um den Mittelpunkt M' angeordnet, durch welchen die Drehachse A verläuft. Die Drehachse A ist insbesondere senkrecht zur Riemenscheibe 4.2a selbst ausgerichtet. Zudem verläuft die Drehachse A vertikal durch den Zuführbehälter 2.

Die Riemenscheiben 4.2a und 4.3a und der Antriebsriemen 46 sind zudem unter einer Abdeckung 19 angeordnet. Die Abdeckung 19 sorgt dafür, dass die Antriebsmittel 4.2a und 4.3a und der Riemen 46 von außen nicht sichtbar sind und zudem vor Verunreinigung z.B. durch Staub geschützt sind. Die Riemenscheibe 4.2a wird über ein Kugellager 7 betrieben um die Reibung während des Betriebs zu minimieren. An der Innenwand 20 des Kugellagers sind Verschraubungspunkte 18a vorgesehen, mittels welcher eine Schraubverbindung mit dem unteren Ende des Zuführbehälters 2 ausgebildet sein kann.

Die Verbindung der Verteileinrichtung 3 mit dem Zahnrad 4.2 bzw. der Riemenscheibe 4.2a wird über eine Schraubverbindung hergestellt. Dabei wird die Verteileinrichtung 3 an den Punkten 18 mit dem Zahnrad 4.2 bzw. der Riemenscheibe 4.2a verschraubt. Alternativ kann die Verbindung auch über eine Steck- oder Klebverbindung hergestellt werden.

Durch die Kopplung der Verteileinrichtung 3 mit dem Zahnrad 4.2 bzw. der Riemenscheibe 4.2a wird das Drehmoment des Ritzels 4.3 mittels des Zahnrads 4.2 bzw. der Riemenscheibe 4.2a auf die Verteileinrichtung 3 übertragen.

Aufgrund der Kopplung der Verteileinrichtung 3 mit dem Zahnrad 4.2 bzw. der Riemenscheibe 4.2a und der Verschraubung der Innenwand 20 des Kugellagers 7 mit dem Zuführbehälter 2, sowie ggf. der Ausbildung der mittigen Achse 34 und dessen Drehlagers 35 ist die Verteileinrichtung 3 wie das Zahnrad 4.2 bzw. die Riemenscheibe 4.2a um die Drehachse A drehbar. Das Zahnrad 4.2 bzw. die Riemenscheibe 4.2a weist zudem eine mittige Öffnung auf, so dass das partikelförmige Material 28 durch das Zahnrad 4.2 bzw. die Riemenscheibe 4.2a in die Verteileinrichtung 3 fallen kann. Der Radius des Zahnrads 4.2 bzw. der Riemenscheibe 4.2a wird dabei so gewählt, dass das partikelförmige Material 28 der Verteileinrichtung 3 ungehindert zugeführt werden kann. Dadurch, dass die Verteileinrichtung 3 direkt mit dem Zahnrad 4.2 bzw. der Riemenscheibe 4.2a verbunden ist, erhält die Verteileinrichtung 3 zudem den Drehsinn D1 des Zahnrads 4.2. bzw. der Riemenscheibe 4.2a.

Weiterhin ist die Rotationsgeschwindigkeit der Verteileinrichtung 3 abhängig von der Rotationsgeschwindigkeit des Zahnrads 4.2 bzw. der Riemenscheibe 4.2a. Diese wiederum ist aufgrund der Drehmomentübertragung durch das Ritzel 4.3 bzw. die Riemenscheibe 4.3a abhängig von der Rotationsgeschwindigkeit des Ritzels 4.3 bzw. der Riemenscheibe 4.3a. Die Rotationsgeschwindigkeit bestimmt zudem die Weite, mit welcher das partikelförmige Material 28 aus der Verteileinrichtung 3 in den Behälter des Reaktors ausgeworfen wird.

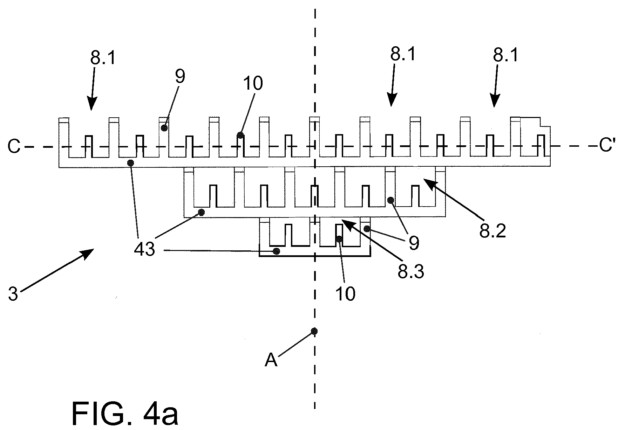

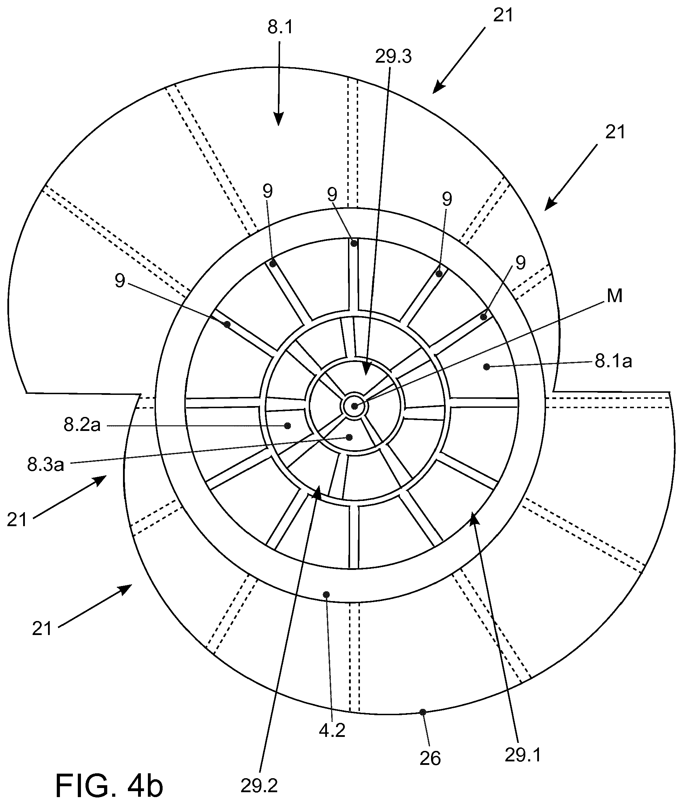

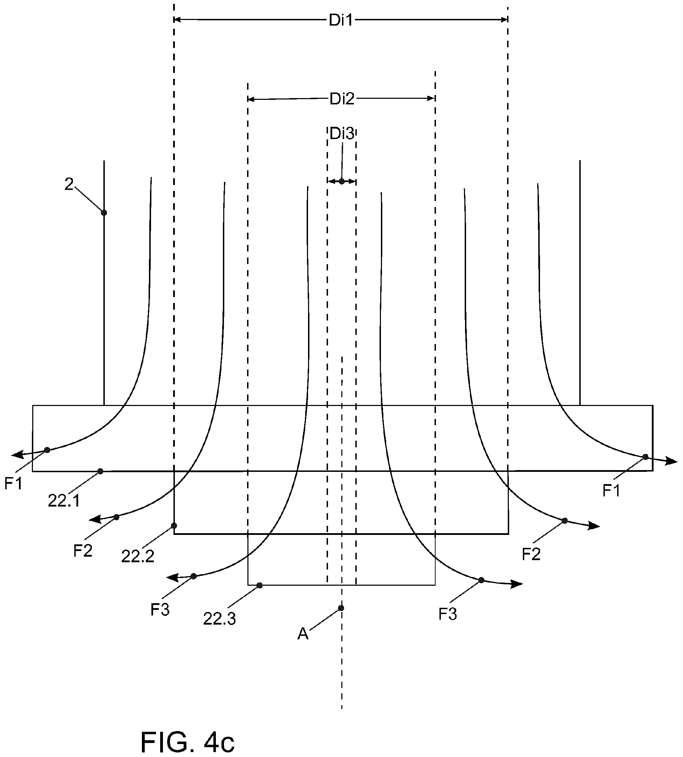

Mit Bezug zu den Figuren 4a, 4b und 4c ist ein schematischer Aufbau eines Ausführungsbeispiels der Verteileinrichtung 3 gezeigt. Dabei ist in Figur 4a eine Ansicht der Verteileinrichtung 3 von der Seite, in Figur 4b eine Ansicht der Verteileinrichtung 3 von oben und in Figur 4c wiederum eine schematische Seitenansicht der Verteileinrichtung 3 gezeigt.

Die Verteileinrichtung 3 ist in mehrere Sektoren 8.1 bis 8.3 unterteilt. Dabei sind die Sektoren 8.1 auf dem ersten Modul 22.1, die Sektoren 8.2 auf den zweiten Modul 22.2 und die Sektoren 8.3 auf dem dritten Modul 22.3 gebildet. Die Sektoren 8.1 bis 8.3 sind dabei jeweils durch Trennelemente 9 voneinander abgetrennt. Die Trennelemente 9 sind beispielsweise als im Wesentlichen vertikale Wände ausgebildet, die zwischen jeweils zwei benachbarten Sektoren 8.1, 8.2 oder 8.3 angeordnet sind.

In den Sektoren 8.1, 8.2 und 8.3 wiederum sind Zwischentrennelemente 10 angeordnet, welche die Sektoren 8 in Untersektoren (Halbsektoren) unterteilen. Die Zwischentrennelemente 10 sind beispielsweise ebenso als im Wesentlichen vertikale Zwischenwände ausgebildet. Die Zwischentrennelemente 10 sind zudem niedriger und/oder schmaler als die Trennelemente 9 ausgebildet. Beispielsweise sind die Zwischentrennelemente 10 lediglich halb so hoch und/oder halb so breit wie die Trennelemente 9 ausgebildet. Insbesondere durch die unterschiedliche Höhe der Zwischentrennelemente 10 zu den Trennelementen 9 ist es möglich, dass partikelförmiges Material 28 von einem Untersektor in einen anderen Untersektor gelangt. Ein Austausch partikelförmigen Materials 28 zwischen den Sektoren 8.1, 8.2 oder 8.3 hingegen ist nicht möglich. Durch die Unterteilung der Sektoren 8.1, 8.2 und 8.3 in Untersektoren wird gewährleistet, dass sich das partikelförmige Material 28 bereits in der Verteileinrichtung 3 noch gleichmäßiger verteilt.

Dadurch, dass die Verteileinrichtung 3 drei ringförmige konzentrische Module 22.1 bis 22.3 aufweist, ergibt sich, dass Auslassöffnungen 21, die von den Sektoren 8.1 des ersten 22.1, den Sektoren 8,2 des zweiten 22.2 Moduls und den Sektoren 8.3 des dritten ringförmigen Moduls 22.3 gebildet werden auf drei unterschiedlichen Ebenen liegen. Die Auslassöffnungen 21, die von den Sektoren 8.1 des ersten ringförmigen Moduls 22.1 gebildet werden, sind auf einer oberen Ebene, die Auslassöffnungen 21, die von den Sektoren 8.2 des zweiten ringförmigen Moduls 22.2 gebildet werden, sind auf einer mittleren Ebene und die Auslassöffnungen 21, die von den Sektoren 8.3 des dritten ringförmigen Moduls 22.3 gebildet werden, sind auf einer unteren Ebene angeordnet.

An jedem der Module 22.1 bis 22.3 können weitere Mittel zum Verteilen des partikelförmigen Materials 28 an den Auslassöffnungen 21 angeordnet sein. Diese Mittel zum Verteilen können beispielsweise bürstenartig ausgebildet sein, die das partikelförmige Material 28 in verschiedene Richtungen ablenken. Die Bürsten wiederum weisen Borsten auf, die beispielweise aus einem weichen und elastischen Kunststoff-Material gefertigt sind. Die Bürsten können zudem verschiedene Formen aufweisen. Solche Bürsten sind beispielsweise in der WO 2005/051814 A1 beschrieben, welche durch Bezugnahme in die vorliegende Anmeldung aufgenommen wird. Die Borsten können dabei nur am äußeren Rand der jeweiligen Bodenplatten 43 befestigt sein; sie können aber auch alternativ oder zusätzlich am äußeren Ende einzelner oder aller Trennelemente 9 oder am äußeren Ende einzelner oder aller Zwischenelemente 10 befestigt sein und jeweils im Wesentlichen radial nach außen weisen. Die Borsten können dabei einzeln oder büschelweise angebracht, z.B. in entsprechenden Bohrungen befestigt, wie z.B. eingeklebt, sein,

Wie in Figur 4b gezeigt, weisen die Sektoren 8.1 bis 8.3 eines jeden ringförmigen Moduls 22.1 bis 22.3 Sektorenöffnungen 8.1a, 8.2a und 8.3a auf, die in Richtung des darüber befindlichen Zuführbehälters 2 geöffnet sind.

In Figur 4c eine weitere Seitenansicht der Verteileinrichtung 3. Die unterschiedlichen Größen der Innendurchmesser Di1 bis Di3 der ringförmigen Module 22.1 bis 22.3 werden dabei durch die konzentrische Anordnung der ringförmigen Module 22.1 bis 22.3 ersichtlich. Der Außendurchmesser des ringförmigen Moduls 22.1 der oberen Ebene ist dabei nicht konstant um den Mittelpunkt M der Verteileinrichtung 3. Der Außenradius des ringförmigen Moduls 22.1 nimmt in der in Figur 3b gezeigten unteren Hälfte von links nach rechts zu und in der oberen Hälfte des ringförmigen Abschnitts 22.1 von rechts nach links zu. Dadurch ergibt sich die in Figur 4b gezeigte Gesamtform des oberen ringförmigen Abschnitts 22.1.

Zudem ist das obere ringförmige Modul 22.1, wie in Figur 4b gezeigt, teilweise durch eine Abdeckung 26 abgedeckt. Die Trennelemente 9 des Teils des oberen ringförmigen Moduls 22.1, der von der Abdeckung 26 abgedeckt wird, sind dabei durch gestrichelte Linien angedeutet.

Das Zahnrad 4.2 ist beispielsweise mit der Abdeckung 26 verbunden. Zudem wird durch die Abdeckung 26 verhindert, dass partikelförmiges Material 28 unkontrolliert nach oben aus der Verteileinrichtung 3 austreten kann. Die Abdeckung 26 stellt also zudem einen Abschuss der Verteileinrichtung 3 nach oben da. Zudem wird verhindert, dass Verunreinigungen und Schmutz in die Verteileinrichtung gelangen.

Durch die nach oben geöffneten Sektorenöffnungen 8.1a bis 8.3a weisen die ringförmigen Module 22.1 bis 22.3 nach oben geöffnete Abschnitte 29.1 bis 29.3 auf. Der Zuführbehälter 2 ist dabei direkt über diesen Abschnitten 29.1 bis 29.3 angeordnet. Dadurch wird der Verteileinrichtung 3 partikelförmiges Material 28 zugeführt.

Eine Rotation des Zahnrades 4.2 führt dann, wie bereits erläutert, zu einer Rotation der Verteileinrichtung 3. Dies wiederum führt dazu, dass das partikelförmige Material 28, welches der Verteileinrichtung 3 aus dem Zuführbehälter 2 zugeführt wird, einer Zentrifugalkraft ausgesetzt wird. Dadurch wird das partikelförmige Material 28 aus der Verteileinrichtung 3 in den Behälter des Reaktors geschleudert. Dabei ist die Weite, mit welcher das partikelförmige Material 28 in den Behälter des Reaktors ausgeworfen wird, abhängig von der Geschwindigkeit des partikelförmigen Materials 28 zum Zeitpunkt des Austritts an den Auslassöffnungen 21 der verschiedenen ringförmigen Abschnitte 22.1 bis 22.3 der Verteileinrichtung 3.

Der Fluss des partikelförmigen Materials 28 durch die Verteileinrichtung wird mit Bezug zu Figur 4c erläutert.

Der Innendurchmesser Di1 des obersten ringförmigen Moduls 22.1 ist dabei größer als der Innendurchmesser Di2 des mittleren ringförmigen Moduls 22.2, welcher wiederum größer als der Innendurchmesser Di3 des untersten ringförmigen Moduls 22.3 ist. Es ergibt sich daher eine Innendurchmesser-Relation von: Di1>Di2>Di3.

Oberhalb des obersten ringförmigen Moduls 22.1 sind die Durchflusssteuerungsmittel 5 und der Zuführbehälter 2 angeordnet. Um eine Befüllung aller ringförmigen Module 22.1 bis 22.3 bereitzustellen, muss der Innendurchmesser des Zuführbehälters 2 größer als der Innendurchmesser Di1 des obersten ringförmigen Moduls 22.1 sein.

Partikelförmiges Material 28, das in den Bereich zwischen der Wand des Zuführbehälters 2 und dem Innendurchmesser Di1 in den Zuführbehälter 2 gelangt, fällt daher in das oberste ringförmige Modul 22.1. Der Fluss des partikelförmigen Materials 28 folgt dabei schematisch den Pfeilen F1. Partikelförmiges Material 28, welches in dem Bereich zwischen dem Innendurchmesser Di1 und Di2 in den Zuführbehälter 2 gelangt, fällt in das mittlere ringförmige Modul 22.2. Der Fluss des partikelförmigen Materials 28, das in das mittlere ringförmige Modul 22.2 fällt, ist dabei durch die Pfeile F2 dargestellt. Partikelförmiges Material 28, welches in dem Bereich zwischen dem Innendurchmesser Di2 und Di3 in den Zuführbehälter 2 gelangt fällt in das unterste ringförmige Modul 22.3. Der Fluss des partikelförmigen Materials 28, das in das unterste ringförmige Modul 22.3 fällt, ist dabei durch die Pfeile F3 dargestellt.

Zudem weisen die ringförmigen Module 22.1 bis 22.3 unterschiedlich große Außendurchmesser auf. Dadurch ergeben sich unterschiedliche Auswurfweiten für das partikelförmige Material 28, welches von den unterschiedlichen Ebenen ausgeworfen wird.

In einer Ausführungsform weist zumindest das obere ringförmige Modul 22.1 die mit Bezug zu Figur 4b beschriebene Form auf. Durch die Veränderung des Außenradius des oberen ringförmigen Abschnitts 22.1 weisen Partikel in den verschiedenen Sektoren 8 des oberen ringförmigen Abschnitts 22.1 unterschiedliche Radialgeschwindigkeiten an den jeweiligen Auslassöffnungen 21 auf. Dadurch ist auch die Auswurfweite des partikelförmigen Materials 28, das aus dem oberen ringförmigen Modul 22.1 in den Behälter ausgeworfen wird, unterschiedlich. Zusätzlich können auch das zweite 22.2 und das dritte ringförmige Modul 22.3 eine mit Bezug zu Figur 4b erläuterte Gesamtform aufweisen.

Alternativ oder zusätzlich kann auch die Rotationsgeschwindigkeit der Verteileinrichtung 3 variiert werden. Mittels der Rotationsgeschwindigkeit kann die Auswurfweite des partikelförmigen Materials 28 gesteuert werden. Je schneller sich die Verteileinrichtung 3 dreht, desto höher ist die Radialgeschwindigkeit des partikelförmigen Materials 28 an den jeweiligen Auslassöffnungen 21 der unterschiedlichen ringförmigen Module 22.1 bis 22.3.

Alternativ oder zusätzlich kann die Verteileinrichtung 3 auch in dem Behälter translatorisch bewegt werden. Beispielsweise kann die gesamte Befüllvorrichtung 1 in dem Behälter des Reaktors hin- und hergeschwenkt werden. Dadurch ergibt sich eine besonders gleichmäßige Verteilung des partikelförmigen Materials in dem Behälter.

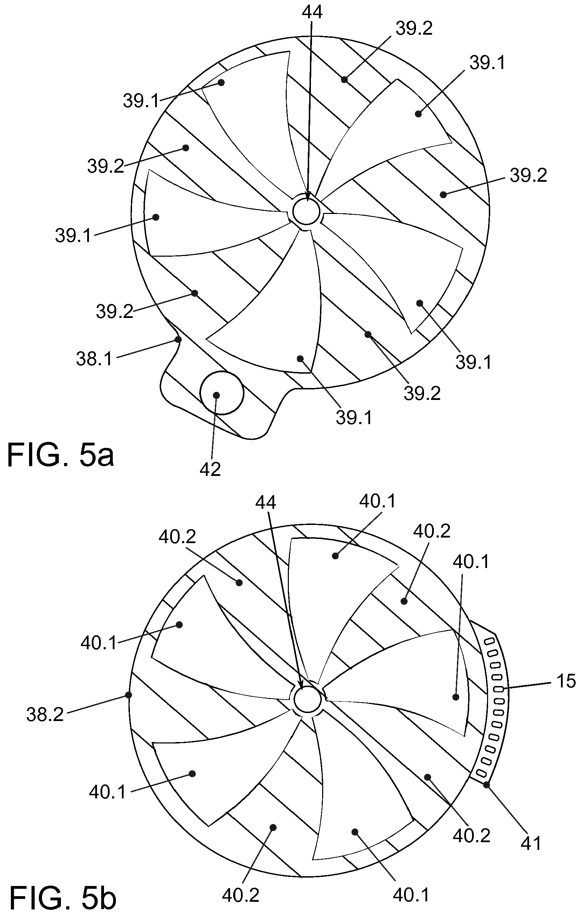

Mit Bezug zu den Figuren 5a bis 5c wird ein erstes Ausführungsbeispiel für das zwischen dem Zuführbehälter 2 und der Verteileinrichtung 3 angeordnete Durchflusssteuerungsmittel 5 erläutert.

Das Durchflusssteuerungsmittel 5 umfasst eine erste, feste Scheibe 38.1 und eine zweite, bewegliche, insbesondere drehbare Scheibe 38.2. Die Scheibe 38.1 ist in Figur 5a gezeigt. Die Scheibe 38.1 wird an der unteren Öffnung 2.2 des Zuführbehälters 2 angeordnet. Die Scheibe 38.1 bildet daher den Boden des Zuführbehälters 2 und schließt den Zuführbehälter 2 nach unten ab.

In der Scheibe 38.1 sind Öffnungen 39.1 und Stege 39.2 ausgebildet. Durch die Öffnungen 39.1 gelangt das partikelförmige Material 28 in den Behälter. Die Öffnungen 39.1 sind dabei derart ausgebildet, dass durch sie mehrere Sektoren 8 der ringförmigen Module 22.1 bis 22.3 befüllbar sind. Weiterhin weist die Scheibe 38.1 eine Bohrung 44 auf, durch welche die gegebenenfalls vorhandene Achse 34, wie bereits mit Bezug zu Figur 2a erläutert, hindurchtritt.

Zur gezielten Steuerung des Durchflusses an partikelförmigem Material 28 durch das Durchflusssteuerungsmittel 5 ist unterhalb der ersten Scheibe 38.1 die zweite Scheibe 38.2 angeordnet. Die zweite Scheibe 38.2 ist dabei komplementär zu der ersten Scheibe 38.1 ausgebildet. Die zweite Scheibe weist jedoch wie die Scheibe 38.1 die Bohrung 44 auf, durch welche die gegebenenfalls vorhandene Achse 34 durchtreten kann. Die Bohrungen 44 der Scheibe 38.1 und der zweiten Scheibe 38.2 sind dabei direkt übereinander angeordnet.

In einer Einstellung ist die zweite Scheibe 38.2 derart unterhalb der ersten Scheibe 38.1 angeordnet, dass die Öffnungen 39.1 und 40.1 direkt übereinander liegen. Dadurch werden Durchlässe 16 gebildet, durch welche das partikelförmige Material 28 in den Behälter fließen kann. Die Größe der Durchlässe 16 ist dabei über die Stellung der beiden Scheiben 38.1 und 38.2 zueinander variierbar. Wird die weitere Scheibe 38.2 relativ zu der Scheibe 38.1 gedreht, schieben sich die Stege 40.2 der weiteren Scheibe 38.2 unter die Öffnungen 39.1 der ersten Scheibe 38.1. Dadurch werden die Durchlässe 16 verkleinert.

Um die zweite Scheibe 38.2 relativ zu der ersten Scheibe 38.1 zu drehen, weist die weitere Scheibe 38.2 einen Abschnitt 41 auf, in welchem Eingriffe 15 ausgebildet sind.

In die Eingriffe 15 greifen Hervortretungen (insbesondere Zähne) 23 eines Stellrades 12.2, welches Teil einer Stelleinrichtung 12 ist, ein.

Das Stellrad 12.2 ist über eine Welle 12.3 mit einem Stellmotor 12.1 gekoppelt. Der Stellmotor 12.1 wird mittels eines Druckknopfes 12.4, der von einem Nutzer bedient werden kann, angetrieben.

Wird der Stellmotor 12.1 angetrieben, wird eine Drehung auf die Welle 12.3, an welcher das Stellrad 12.2 befestigt ist, übertragen. Dadurch wird das Stellrad gedreht.

Dadurch kann die zweite Scheibe 38.2 so lange gedreht werden, bis die Stege 40.2 vollständig unterhalb von den Öffnungen 39.1 der ersten Scheibe 38.1 angeordnet sind. Die Durchlässe 16 sind dann geschlossen, so dass kein partikelförmiges Material 28 mehr in den Behälter fließen kann.

Alternativ kann die zweite Scheibe 38.2 auch oberhalb der Scheibe 38.1 angeordnet sein. Die Scheibe 38.1 kann beispielsweise auch aus einem ersten Teil, welches nur die Stege 39.2 und einem zweiten Teil, welches nur einen Außenring aufweist, an welchem das erste Teil befestigt wird, zusammengesetzt sein. Die Öffnungen 39.1 ergeben sich dann durch die Stege 39.1 in Kombination mit dem Außenring.

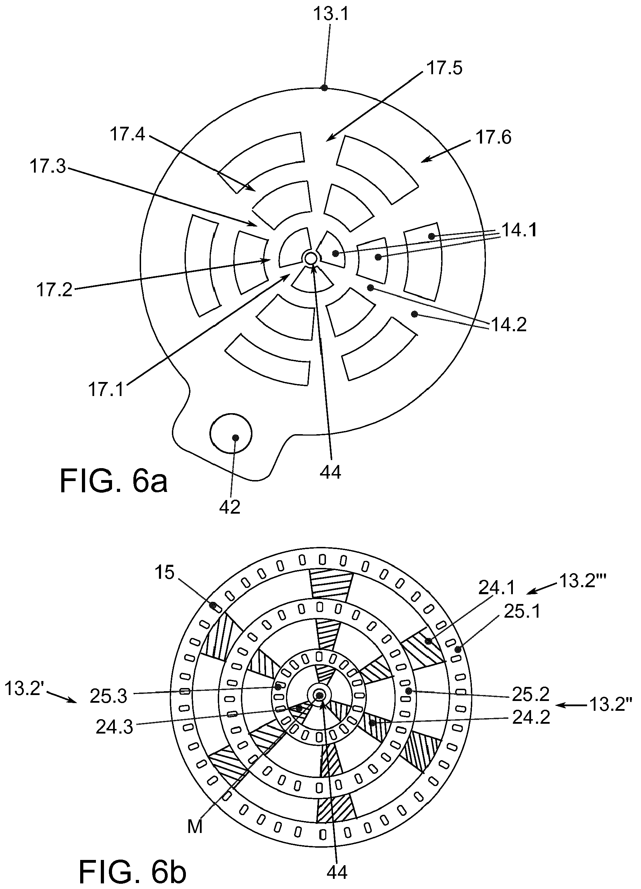

Mit Bezug zu den Figuren 6a bis 6d wird ein zweites Ausführungsbeispiel für das zwischen dem Zuführbehälter 2 und der Verteileinrichtung 3 angeordnete Durchflusssteuerungsmittel 5 erläutert.

Das Durchflusssteuerungsmittel 5 umfasst dabei eine Scheibe 13.1, wie sie in Figur 6a gezeigt ist. Die Scheibe 13.1 ist als Kreisscheibe ausgestaltet. Die Scheibe 13.1 wird an der unteren Öffnung 2.2 des Zuführbehälters 2 angeordnet. Die Scheibe 13.1 bildet daher den Boden des Zuführbehälters 2 und schließt den Zuführbehälter 2 nach unten ab. Wie auch die Scheiben 38.1 und 38.2 weist die Scheibe 13.1 die Bohrung 44 auf, durch welche die gegebenenfalls vorhandene Achse 34 durchtreten kann.

Die Scheibe 13.1 weist sechs Ringabschnitte 17.1 bis 17.6 auf. Im ersten 17.1, dritten 17.3 und fünften Ringabschnitt 17.5 weist die erste Scheibe 13.1 Öffnungen 14.1 auf. Die Öffnungen 14.1 sind als Ringsektoren ausgestaltet. Zudem sind die Öffnungen 14.1 derart groß, das durch jede Öffnung 14.1 mehrere Sektoren der ringförmigen Module 22.1 bis 22.3 der Verteileinrichtung 3 befüllbar sind. Die Kreisscheibe 13.1 ist insbesondere derart angeordnet, dass ihre Öffnungen 14.1 direkt oberhalb der Sektoren 8 der Verteileinrichtung 3 liegen.

Die restlichen Ringabschnitte 17.2, 17.4 und 17.6 weisen keine Öffnungen auf und sind mittels der Stege 14.2, die in dem ersten 17.1, dritten 17.3 und fünften 17.5 Ringabschnitt benachbart zu den Öffnungen 14.1 angeordnet sind, miteinander verbunden.

Weiterhin umfasst das Durchflussteuerungssteuerungsmittel 5 drei Öffnungssteuerungsmittel 13.2' bis 13.2"', wie sie in Figur 6b gezeigt sind. Jedes der Öffnungssteuerungsmittel 13.2' bis 13.2'" weist zumindest einen Ringabschnitt 25.1 bis 25.3 und Blenden 24.1 bis 24.3 auf. Die Ringabschnitte 25.1 bis 25.3 sind derart ausgebildet, dass sie um einen Mittelpunkt M angeordnete konzentrische Ringe bilden. Dabei bildet der Ringabschnitt 25.1 des Öffnungssteuerungsmittels 13.2'" einen äußeren Ring, der Ringabschnitt 25.2 des Öffnungssteuerungsmittels 13.2" einen mittleren Ring und der Ringabschnitt 25.3 des Öffnungssteuerungsmittels 13.2' einen inneren Ring. Zudem weisen die Öffnungssteuerungsmittel 13.2' bis 13.2'" an ihrem Mittelpunkt M ebenso die Bohrung 44 auf, so dass die gegebenenfalls vorhandene Achse 34 hindurchtreten kann. Dabei sind die Bohrungen 44 der Öffnungssteuerungsmittel 13.2' bis 13.2'" sowie der Scheibe 13.1 übereinander angeordnet.

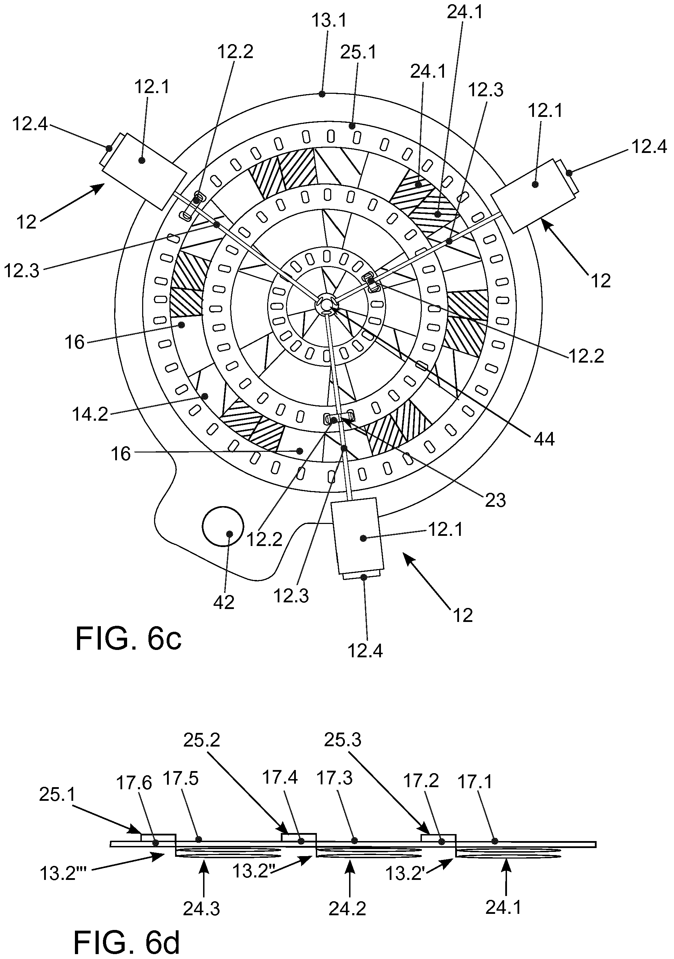

Im Beispiel der Figur 6b sind alle Blenden 24.1 untereinander angeordnet. Ebenso sind die Blenden 24.2 und die Blenden 24.3 untereinander angeordnet. Bei einem Zusammenbau mit der Scheibe 13.1 wären die Blenden 24.1 bis 24.3 unterhalb der zugehörigen Stege angeordnet sein und somit ein vollständig geöffnetes Durchflusssteuerungsmittel 5 bilden, wie in Figur 6d in Seitenansicht gezeigt ist.

Der Ringabschnitt 25.3 ist mit den Blenden 24.3 verbunden. Der Ringabschnitt 25.2 ist mit den Blenden 24.2 verbunden und der Ringabschnitt 25.1 ist mit den Blenden 24.1 verbunden.

Die Blenden 24.1 des äußeren Öffnungssteuerungsmittels 13.2'" sind derart ausgebildet, dass sie jeweils ein Sektorenöffnung 8.1 a der Sektoren 8.1 des ringförmigen Moduls 22.1 der Verteileinrichtung 3 ganz oder teilweise abdecken können. Zudem weist das äußere Öffnungssteuerungsmittels 13.2'" so viele Blenden 24.1 auf, wie das ringförmige Modul 22.1 Sektorenöffnungen 8.1 a aufweist. Dadurch kann wiederum jede Sektorenöffnung 8.1 a des ringförmigen Abschnitts 22.1 einzeln ganz oder teilweise abgedeckt werden.

Die Blenden 24.2 des mittleren Öffnungssteuerungsmittels 13.2" sind derart ausgebildet, dass sie jeweils eine Sektorenöffnung 8.2a des ringförmigen Moduls 22.2 der Verteileinrichtung 3 ganz oder teilweise abdecken können. Zudem weist das mittlere Öffnungssteuerungsmittels 13.2" so viele Blenden 24.2 auf, wie das ringförmige Modul 22.2 Sektorenöffnungen 8.2a aufweist. Dadurch kann jede Sektorenöffnung 8.2a des ringförmigen Abschnitts 22.2 einzeln ganz oder teilweise abgedeckt werden.

Die Blenden 24.3 des inneren Öffnungssteuerungsmittels 13.2' sind derart ausgebildet, dass sie jeweils eine Sektorenöffnung 8.3a des ringförmigen Moduls 22.3 der Verteileinrichtung 3 ganz oder teilweise abdecken können. Zudem weist das innere Öffnungssteuerungsmittels 13.2' so viele Blenden 24.3 auf, wie das ringförmige Modul 22.3 Sektorenöffnungen 8.3a aufweist. Dadurch kann jede Sektorenöffnung 8.3a des ringförmigen Abschnitts 22.3 einzeln ganz oder teilweise abgedeckt werden.

Dazu ist in Figur 6d eine Seitenansicht des Durchflusssteuerungsmittels 5 gezeigt. Im Beispiel der Figur 6d sind die Öffnungen 14.1 vollständig geöffnet. Die Blenden 24.1 des äußeren Öffnungssteuerungsmittels 13.2'" sind dabei unterhalb der Stege 14.2 des fünften Ringabschnitts 17.5 der Scheibe 13.1 angeordnet. Der Ringabschnitt 25.1 des äußeren Öffnungssteuerungsmittels 13.2'" ist zudem in dem Ringabschnitt 17.6 der Scheibe 13.1 angeordnet.

Die Blenden 24.2 des mittleren Öffnungssteuerungsmittels 13.2" sind unterhalb der Stege 14.2 des dritten Ringabschnitts 17.3 der Scheibe 13.1 angeordnet. Der Ringabschnitt 25.2 des mittleren Öffnungssteuerungsmittels 13.2" ist zudem in dem Ringabschnitt 17.4 der Scheibe 13.1 angeordnet.

Die Blenden 24.3 des inneren Öffnungssteuerungsmittels 13.2' sind unterhalb der Stege 14.2 des ersten Ringabschnitts 17.1 der Scheibe 13.1 angeordnet. Der Ringabschnitt 25.3 des mittleren Öffnungssteuerungsmittels 13.2' ist zudem in dem Ringabschnitt 17.2 der Scheibe 13.1 angeordnet.

Die Ringabschnitte 25.1 bis 25.3 der Öffnungssteuerungsmittel 13.2' bis 13.2'" sind drehbar auf dem jeweiligen Ringabschnitt 17.2, 17.4 oder 17.6 der Scheibe 13.1 gelagert. Zudem sind die Blenden 24.1 bis 24.3 mit dem jeweils zugehörigen Ringabschnitt 25.1 bis 25.3 verbunden. Dies führt dazu, dass bei einer Drehung eines Ringabschnitts 25.1 bis 25.3 die mit dem jeweiligen Ringabschnitt 25.1 bis 25.3 verbundenen Blenden 24.1 bis 24.3 in ihrer Position gegenüber den Öffnungen 14.1 der Scheibe 13.1 veränderbar sind.

In Figur 6c ist ein vollständig zusammengesetztes Durchflusssteuerungsmittel 5 schematisch gezeigt.

Um die Ringabschnitte 25.1 bis 25.3 der Öffnungssteuerungsmittel 13.2' bis 13.2'" zu drehen, umfasst das Durchflusssteuerungsmittel 5 für jedes Öffnungssteuerungsmittel 13.2' bis 13.2'" eine Stelleinrichtung 12. Das Durchflusssteuerungsmittel 5 weist also im vorliegenden Beispiel der Figur 6c insgesamt drei Stelleinrichtungen 12 auf.

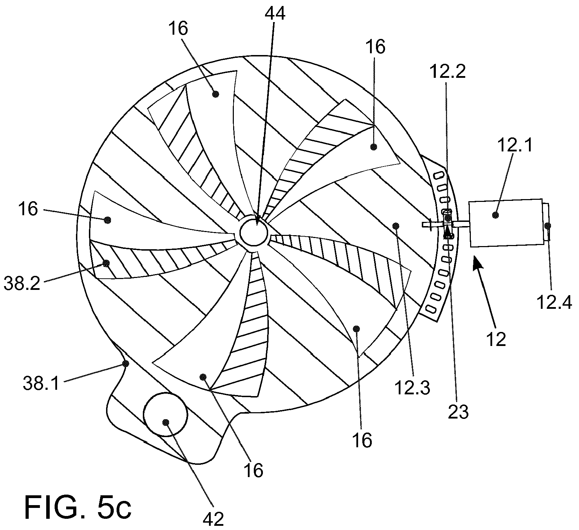

Jede der drei Stelleinrichtung 12 ist dabei wie die Stelleinrichtung aus dem ersten Ausführungsbeispiel der Figur 5c ausgebildet. Jede Stelleinrichtung 12 umfasst daher einen Stellmotor 12.1, ein drehbares Stellrad 12.2 und eine Welle 12.3, über welche der Stellmotor 12.1 mit dem Stellrad 12.2 gekoppelt ist. Der Stellmotor 12.1 kann mittels eines Druckknopfes 12.4, der von einem Nutzer bedienbar ist, angetrieben werden.

Der Stellmotor 12.1 überträgt dabei zunächst eine Drehung auf die Welle 12.3, an welcher das Stellrad 12.2 befestigt ist. Dadurch wird das Stellrad 12.2 gedreht.

Das Stellrad 12.2 wiederum weist Hervortretungen 23 auf. Die Hervortretungen 23 greifen in die Eingriffe 15 der Ringabschnitte 25.1 bis 25.3 ein. Der Abstand der Hervortretungen 23 zueinander ist dabei derart gewählt, dass er dem Abstand der Eingriffe 15 entspricht. Dabei kann der Abstand der Eingriffe 15 in jedem Ringabschnitt 25.1 bis 25.3 anders gewählt sein.

Wird das Stellrad 13.2 gedreht, wird der Ringabschnitt 25.1 von den Hervortretungen 23, welche in die Eingriffe 15 eingreifen, verschoben und dadurch gedreht. Die nächste Hervortretung 23 greift dann wiederum in den nächsten Eingriff 15 ein.

Wird der Druckknopf 12.4 losgelassen, wird auch die Drehung des Stellmotors 12.1 gestoppt. Dadurch wird die Drehung des Ringabschnitts 25.1 gestoppt.

Dadurch, dass der Ringabschnitt 25.1 mit den Blenden 24.1, der Ringabschnitt 25.2 mit den Blenden 24.2 und der Ringabschnitt 25.3 mit den Blenden 24.3 verbunden ist, werden die Blenden 24.1 bis 24.3 bewegt, wenn ein zugehöriger Ringabschnitt 25.1 bis 25.3 gedreht wird. Dadurch werden die Positionen der Blenden relativ zu den Öffnungen 14.1 der Scheibe 13.1 verändert.

Dies wird mit Bezug zu dem äußeren Öffnungssteuerungsmittel 13.2'" erläutert. Beispielsweise wird pro Drehung des Stellrads 12.2 eine der Blenden 24.1 vollständig unter dem Steg 14.2 des sechsten Ringabschnitts 17.6 der Scheibe 13.1 hervorgezogen. Dadurch wird pro Drehung eine gesamte Sektorenöffnung 8.1 a des ringförmigen Moduls 22.1 der Verteileinrichtung 3 durch eine Blende 24.1 abgedeckt. Es kann dann kein partikelförmiges Material 28 in den abgedeckten Sektor 8.1 eindringen. Zudem wird im vorliegenden Beispiel bei einer Drehung des Stellrads unter jedem der Stege 17.2 des sechsten Ringabschnitts 17.6 der Scheibe 13.1 jeweils eine Blende 24.1 hervorgezogen.

Dadurch wird jede Öffnung 14.1 des fünften Ringabschnitts 17.5 der Scheibe 13.1 durch genau eine Blende 24.1 abgedeckt. Da jedoch eine Blende 24.1 lediglich die Größe einer Sektorenöffnung 8.1a des ringförmigen Moduls 22.1 aufweist, wird die Öffnung 14.1 nicht vollständig abgedeckt, sondern lediglich deren Größe verkleinert. Dadurch werden Durchlässe 16 gebildet, deren Größen kleiner sind als die Größen der Öffnungen 14.1. Die Größen der Durchlässe 16 können dabei über die Anzahl der Blenden 24.1, die unter den Stegen 14.2 hervorgezogen werden, eingestellt werden. Dabei entspricht die Größe eines Durchlasses 16 der Größe der Öffnung 14.1 der Scheibe 13.1, wenn keine der Blenden 24.1 unter den Stegen 14.2 der Scheibe 13.1 hervorgezogen sind.

Durch eine weitere Drehung des Stellrades 12.2 wird eine weitere Blende 24.1 unter den Stegen 14.2 des fünften Ringabschnitts 17.5 der Scheibe 13.1 hervorgezogen. Dadurch kann durch die Anzahl der Drehungen des Stellrades 12.2 die Größe der Durchlässe 16, durch welche das partikelförmige Material 28 letztendlich der Verteileinrichtung 3 zugeführt wird, eingestellt werden.

Die Durchlässe 16 für das mittlere 13.2" und das innere 13.2' Öffnungssteuerungsmittel werden auf die gleiche Weise eingestellt wie die Durchlässe 16 des äußeren Öffnungssteuerungsmittels 13.2"'.

Das erste und das zweite Ausführungsbeispiel des Durchflusssteuerungsmittels 5 können beispielsweise miteinander kombiniert werden. Insbesondere kann die weitere Scheibe 38.2 Blenden aufweisen, die bei den Stegen 40.2 befestigt sind. Dadurch können die Öffnungen 39.1 der Scheibe 38.1 durch eine Kombination aus Stegen und Blenden verdeckt werden.

Alternativ können die Öffnungssteuerungsmittel 13.2' bis 13.2'" auch oberhalb der Scheibe 13.1 angeordnet sein.

Alternativ kann auch das erste Ausführungsbeispiel anstatt der weiteren Scheibe 38.2 Blenden umfassen, die unterhalb oder oberhalb der Stege 39.1 der Scheibe 38.1 angeordnet sind. Beispielsweise können drei Blenden unterhalb eines jeden Stegs der Scheibe 38.1 angeordnet sein, wobei drei Blenden gemeinsam die Größe einer Öffnung 39.1 aufweisen. Pro Drehschritt mit der Stelleinrichtung 12 wird dann eine Blende unterhalb bzw. oberhalb der Stege 39.1 hervor- bzw. ausgezogen.

Weiterhin kann das zweite Ausführungsbeispiel anstatt der Blenden 24.1 bis 24.3 eine weitere Scheibe aufweisen, die komplementär zu der Scheibe 13.1 ausgebildet ist.

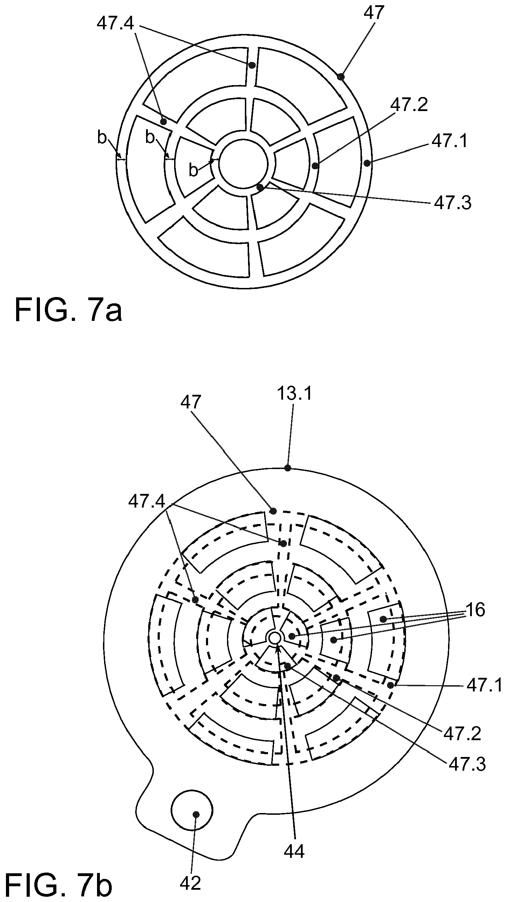

Mit Bezug zu den Figuren 6a, 7a und 7b ein drittes Ausführungsbeispiel für das zwischen dem Zuführbehälter 2 und der Verteileinrichtung 3 angeordnete Durchflusssteuerungsmittel 5 erläutert.

Das Durchflusssteuerungsmittel 5 umfasst eine erste Scheibe 13.1, wie sie bereits mit Bezug zu Figur 6a erläutert wurde. Die Scheibe 13.1 weist sechs Ringabschnitte auf. Im ersten (innersten), dritten (mittleren) und fünften (äußersten) Ringabschnitt weist die erste Scheibe 13.1 Öffnungen auf, die als Ringsektoren ausgestaltet sind.

Weiterhin umfasst das Durchflusssteuerungsmittel gemäß dieser Ausführungsform eine Gitterscheibe oder Wechselscheibe 47 wie in Figur 7a dargestellt. Diese Gitterscheibe 47 umfasst ringförmige, konzentrisch angeordnete ringförmigen Stege 47.1 bis 47.3 und radiale Stege 47.4. Die Gitterscheibe 47 wird derart über der ersten Scheibe 13.1 angeordnet, dass die ringförmigen Stege 47.1 bis 47.3 die Öffnungen 14.1 der Scheibe zumindest teilweise bedecken und die radialen Stege 47.4 auf den Stegen 14.2 der Scheibe 13.1 liegen, wie in Figur 7b gezeigt. Beispielsweise kann die Gitterscheibe so ausgebildet sein, dass die Außenradien der ringförmigen Stege 47.1 bis 47.3 in etwa deckungsgleich mit den Außenradien des fünften, dritten bzw. ersten Ringabschnitts der ersten Scheibe 13.1 sind, die Innenradien der ringförmigen Stege 47.1 bis 47.3 jedoch etwas geringer sind und so Stege einer definierten Breite b bilden.

Über die Breiten b der ringförmigen Stege 47.1 bis 47.3 werden die effektiven Größen der Durchlassöffnungen 16 bestimmt. Dabei können die Breiten b der ringförmigen Stege 47.1 bis 47.3 gleich oder verschieden sein und so gewählt werden, dass sie die Öffnungen 14.1 zu einem Prozentsatz von 1 bis 99%, wie z.B. 5 bis 50 oder 10 bis 30% bedecken. Beispielsweise bedecken die ringförmigen Stege 47.1 bis 47.3 die Öffnungen 14.1 zu 10 oder 20%, so dass die Durchlässe 16 nur noch eine Größe von 90 bzw. 80% der Größe der Öffnung 14.1 besitzen. Sollen die Öffnungen 14.1 zu einem anderen Prozentsatz bedeckt werden, wird die Gitterscheibe 47 durch eine andere Gitterscheibe ausgetauscht, deren ringförmige Stege 47.1 bis 47.3 eine dem gewünschten Bedeckungsgrad entsprechende Breite b aufweisen. Auf diese Weise lässt sich die den einzelnen Sektoren der Verteileinrichtung zugeführte Füllgutmenge bedarfsgereicht voreinstellen. Es beispielsweise auch möglich, einen Satz von unterschiedlichen Wechselscheiben 47 vorzufertigen, aus dem entsprechend den wesentlichen Parametern eines speziellen Füllvorgangs, wie z.B. Art der Füllgutpartikel, Füllgeschwindigkeit, Geometrie des zu befüllenden Behälters (wie z.B. Reaktors) vor Beginn des Füllvorgangs eine spezielle Scheibe 47 ausgewählt und in die erfindungsgemäße Vorrichtung eingesetzt wird, so dass auf diese Weise ein optimales Füllergebnis garantiert werden kann.

Die Gitterscheibe 47 ist vorzugsweise mit der ersten Scheibe 13.1 lösbar verbunden. Sie kann beispielsweise über Schraubverbindungen zwischen den radialen Stegen 47.4 und den Stegen 14.2 an der Scheibe 13.1 befestigt werden. Eine andere Möglichkeit besteht in der Ausbildung wenigstens zweier, nach oben weisenden Zapfen auf der Scheibe 13.1, welche in korrespondierende Ausnehmungen, z.B. im Bereich des äußeren Stegs 47.1 der Scheibe 47, eingreifen (in den Figuren nicht gezeigt).

Die Gitterscheibe 47 kann natürlich auch unter der Scheibe 13.1 angebracht werden, was aber weniger bevorzugt ist.

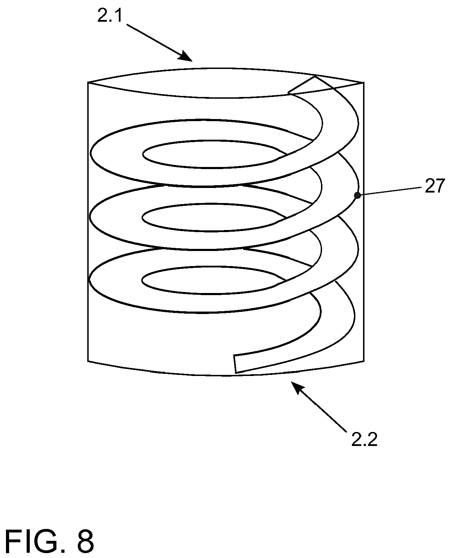

Mit Bezug zu Figur 8 wird eine weitere Ausgestaltung des Zuführbehälters 2 der Befüllvorrichtung 1 gezeigt. Dabei ist innerhalb des Zuführbehälters 2 ein Leitblech 27 angeordnet. Das Leitblech 27 erstreckt sich dabei von der oberen Öffnung 2.1 des Zuführbehälters 2 zu der unteren Öffnung 2.2 des Zuführbehälters 2. Dadurch wird der Aufprall des partikelförmigen Materials 28 auf das Durchflusssteuerungsmittel 5 oder die Verteileinrichtung 3 abgefangen. Dies wiederum verhindert, dass das partikelförmige Material in der Befüllvorrichtung 1 beschädigt wird.

Das Leitblech 17 ist zudem spiralförmig ausgebildet und sorgt dafür, dass das partikelförmige Material von der oberen Öffnung 2.1 zu der unteren Öffnung 2.2 rutscht.

Weitere Abwandlungen der hier beschriebenen konkreten Ausführungsformen kann der Fachmann unter Befolgung der erfindungsgemäßen technischen Lehre bereitstellen.

### Bezugszeichenliste

- 1: Befüllvorrichtung
- 2: Zuführbehälter
- 2.1, 2.2: Öffnungen des Zuführbehälters
- 3: Verteileinrichtung
- 4: Antriebseinrichtung
- 4.1: Motor
- 4.2: erstes Antriebsmittel; Zahnrad
- 4.2a: angetriebenen Riemenscheibe
- 4.3: zweites Antriebsmittel; Ritzel
- 4.3a: Antriebsriemenscheibe
- 5: Durchflusssteuerungsmittel
- 6: Haltemittel
- 7: Kugellager
- 8.1, 8.2, 8,3: Sektor der Verteileinrichtung
- 8.1 a, 8.2a, 8.3a: Sektorenöffnung
- 9: Trennelement
- 10: Zwischentrennelement
- 11: Außenwand
- 12: Stelleinrichtung
- 12.1: Stellmotor
- 12.2: Stellrad
- 12.3: Welle
- 12.4: Druckknopf
- 13.1: Scheibe, Bodenscheibe
- 13.2', 13.2", 13.2'": Öffnungssteuerungsmittel
- 14.1: Öffnung
- 14.2: Steg
- 15: Eingriff
- 16: Durchlass
- 17.1 - 17.6: Ringabschnitte der ersten Scheibe
- 18, 18a: Verschraubungspunkte, Bohrungen
- 19: Abdeckung
- 20: Wand
- 21: Auslassöffnung
- 22.1 - 22.3: ringförmige Module der Verteileinrichtung
- 23: Hervortretungen
- 24.1 - 24.3: Blenden
- 25.1 - 25.3: Ringabschnitte der zweiten Scheiben
- 26: Abdeckung
- 27: Leitblech
- 28: partikelförmiges Material
- 29.1 - 29.3: Abschnitte der ringförmigen Module
- 30: Schraube
- 31: Schraube
- 32: Mutter
- 33: Schraube
- 34: Achse
- 35: Drehlager
- 35.1: drehbares Element, Hülse
- 35.2: Kugellager
- 35.3: Befestigungselement, Flansch
- 36: Befestigungselement
- 37: untere Mutter
- 38.1: Scheibe, Bodenscheibe
- 38.2: zweite Scheibe
- 39.1, 40.1: Öffnungen
- 39.2, 40.2: Stege
- 41: Abschnitt der weiteren Scheibe
- 42: Loch
- 43: Bodenplatte
- 44: Bohrung
- 45: obere Mutter
- 46: Antriebsriemen
- 47: Wechselscheibe, Gitterscheibe
- 47.1, 47.2, 47.3: ringförmige Stege
- 47.4: radiale Stege
- b: Breite der ringförmigen Stege
- A: Drehachse
- B: Befüllrichtung
- M, M': Mittelpunkt
- D1: Drehrichtung
- D2: Drehrichtung
- F1 - F3: Fluss des partikelförmigen Materials
- Di1 - Di3: Innendurchmesser der ringförmigen Module

## Patentansprüche

1. Befüllvorrichtung (1) zum Befüllen eines Behälters mit partikelförmigem Material (28), umfassend
- einen Zuführbehälter (2), der mit dem partikelförmigen Material (28) befüllbar ist, wobei der Zuführbehälter (2) eine untere Öffnung (2.2) aufweist, und
- eine radiale Verteileinrichtung (3), welcher das partikelförmige Material (28) durch die untere Öffnung (2.2) des Zuführbehälters (2) zuführbar ist, und welche mit dem Zuführbehälter (2) um eine Drehachse (A) drehbar verbunden ist, zum Verteilen des von dem Zuführbehälter (2) der Verteileinrichtung (3) zugeführten partikelförmigen Materials (28) in dem zu befüllenden Behälter,
**dadurch gekennzeichnet, dass**
- die Verteileinrichtung (3) mittels einer Antriebseinrichtung (4) antreibbar ist, die außerhalb des Zuführbehälters (2) angeordnet ist.

2. Befüllvorrichtung (1) nach Anspruch 1,
**dadurch gekennzeichnet, dass**
die Antriebseinrichtung (4) an einer Außenwand (11) des Zuführbehälters (2) angeordnet ist.

3. Befüllvorrichtung (1) nach Anspruch 1 oder 2,
**dadurch gekennzeichnet, dass**
die Antriebseinrichtung (4) einen Motor (4.1) umfasst, der mit einem ersten Antriebsmittel (4.2, 4.2a) gekoppelt ist, welches um die Drehachse (A) drehbar ist, wobei das erste Antriebsmittel (4.2, 4.2a) mit der Verteileinrichtung (3) verbunden ist.

4. Befüllvorrichtung (1) nach Anspruch 3,
**dadurch gekennzeichnet, dass**
ein zweites Antriebsmittel (4.3) in das erste Antriebsmittel (4.2) eingreift, so dass ein Drehmoment des zweiten Antriebsmittels (4.3) auf das erste Antriebsmittel (4.2) übertragbar ist.

5. Befüllvorrichtung (1) nach Anspruch 3,
, **dadurch gekennzeichnet, dass**
das zweites Antriebsmittel eine Antriebsriemenscheibe (4.3a) ist, die über einen Antriebsriemen (46) das erste Antriebsmittel antreibt, das als angetriebenen Riemenscheibe (4.2a) ausgebildet ist, so dass ein Drehmoment der zweiten Riemenscheibe (4.3a) auf die erste Riemenscheibe (4.2a) übertragbar ist.

6. Befüllvorrichtung (1) nach Anspruch 4 oder 5
**dadurch gekennzeichnet, dass**
das erste Antriebsmittel (4.2, 4.2a) zwischen dem Zuführbehälter (2) und der Verteileinrichtung (3) angeordnet ist und
das Drehmoment des zweiten Antriebsmittels (4.3,4.3a) mittels des ersten Antriebsmittels (4.2,4.2a) auf die Verteileinrichtung (3) übertragen wird.

7. Befüllvorrichtung (1) nach einem der vorhergehenden Ansprüche,
**dadurch gekennzeichnet, dass**
die Verteileinrichtung (3) eine Vielzahl von Sektoren (8) aufweist, die von der Drehachse (A) radial nach außen gerichtet sind und die durch Trennelemente (9) voneinander getrennt sind, wobei die Trennelemente (9) zur Drehachse (A) radial nach außen verlaufen, so dass zwischen jeweils zwei Trennelementen (9) eine Auslassöffnung (21) für das partikelförmige Material (28) gebildet ist.

8. Befüllvorrichtung (1) nach Anspruch 7,
**dadurch gekennzeichnet, dass**
die Sektoren (8.1, 8.2, 8.3) eine Sektorenöffnung (8.1 a, 8.2a, 8.3a) aufweisen, die in Richtung des Zuführbehälters (2) geöffnet ist, so dass die Sektoren (8) mit dem partikelförmigen Material (28) befüllbar sind.

9. Befüllvorrichtung (1) nach Anspruch 7 oder 8,
**dadurch gekennzeichnet, dass**
die Verteileinrichtung (3) modular aufgebaut ist, wobei die Verteileinrichtung (3) zumindest zwei konzentrische Module (22.1, 22.2, 22.3) aufweist, welche jeweils Sektoren (8) umfassen, wobei die Module stapelförmig übereinander angeordnet sind und die Auslassöffnungen (21) des ersten Moduls (22.1) auf einer ersten oberen Ebene und
die Auslassöffnungen (21) des zweiten Moduls (22.2, 22.3) auf einer zweiten unteren Ebene angeordnet sind, wobei das obere Modul (22.1) einen größeren Durchmesser als das untere Modul aufweist (22.2, 22.3).

10. Befüllvorrichtung (1) nach Anspruch 9,
**dadurch gekennzeichnet, dass**
jedes der Module (22.1, 22.2, 22.3) zumindest einen Abschnitt (29.1, 29.2, 29.3) aufweist, der in Richtung des Zuführbehälters (2) geöffnet ist, so dass die Module (22.1, 22.2, 22.3) mit dem partikelförmigen Material (28) befüllbar sind.

11. Befüllvorrichtung (1) nach einem der vorhergehenden Ansprüche,
**dadurch gekennzeichnet, dass**
die Befüllvorrichtung (1) zumindest ein zwischen dem Zuführbehälter (2) und der Verteileinrichtung (3) angeordnetes Mittel (5) zum Steuern eines Durchflusses des partikelförmigen Materials (28) zu der Verteileinrichtung (3) umfasst.

12. Befüllvorrichtung (1) nach Anspruch 11,
**dadurch gekennzeichnet, dass**
das Durchflusssteuerungsmittel (5) eine Scheibe (13.1, 38.1) mit zumindest einer Öffnung (14.1, 39) umfasst, wobei die Scheibe (13.1, 38.1) einen Boden des Zuführbehälters (2) bildet, der bei der unteren Öffnung (2.2) des Zuführbehälters (2) angeordnet ist.

13. Befüllvorrichtung (1) nach Anspruch 11 oder 12,
**dadurch gekennzeichnet, dass**
das Durchflusssteuerungsmittel (5) ein Öffnungssteuerungsmittel (38.2) umfasst, welches relativ zu der Scheibe (38.1)) bewegbar ist und mittels welchem die Öffnung (39.1) derart abdeckbar ist, dass ein veränderbarer Durchlass (16) gebildet wird, durch den das partikelförmige Material (28) den Sektoren (8) der Verteileinrichtung (3) zuführbar ist.

14. Befüllvorrichtung (1) nach Anspruch 12,
**dadurch gekennzeichnet, dass**
das Öffnungssteuerungsmittel (38.2) eine zweite Scheibe mit zumindest einer Öffnung (40.1) und zumindest einem Steg (40.2) umfasst, wobei die Öffnung (39.1) der Scheibe (38.1) mit dem Steg (40.2) der zweiten Scheibe (38.2) zumindest teilweise abdeckbar ist.

15. Befüllvorrichtung (1) nach Anspruch 11 oder 12,
**dadurch gekennzeichnet, dass**
das Durchflusssteuerungsmittel (5)
a) eine Scheibe (13.1) mit zumindest einer Öffnung (14.1) umfasst, wobei die Scheibe (13.1) einen Boden des Zuführbehälters (2) bildet, der bei der unteren Öffnung (2.2) des Zuführbehälters (2) angeordnet ist; und außerdem
b) eine Gitterscheibe (47) umfasst, die zumindest die eine Öffnung (14.1) der Scheibe (13.1) partiell abdeckt.

16. Befüllvorrichtung (1) nach einem der Ansprüche 11 bis 14,
**dadurch gekennzeichnet, dass**
das Durchflusssteuerungsmittel (5) zumindest eine Stelleinrichtung (12) umfasst, wobei die Stelleinrichtung (12) einen Stellmotor (12.1) umfasst, der ein drehbares Stellrad (12.2) antreibt, und
das Öffnungssteuerungsmittel (38.2) zumindest einen Abschnitt (41) umfasst, welcher Eingriffe (15) aufweist, in welche das Stellrad (12.2) eingreift, wobei durch Drehen des Stellrades (12.2) die Stellung des Öffnungssteuerungsmittels (38.2)relativ zu der Öffnung (39.1) der Scheibe (38.1) veränderbar ist.

17. Verfahren zum Befüllen eines Behälters mit einem partikelförmigen Material unter Verwendung einer Befüllvorrichtung (1) nach einem der Ansprüche 1 bis 16.
